# EUROPÄISCHE PATENTSCHRIFT

(11) **EP 3 001 829 B1**
(45) Veröffentlichungstag und Bekanntmachung des Hinweises auf die Patenterteilung: **19.06.2019**
(21) Anmeldenummer: 14738350.9
(22) Anmeldetag: 12.05.2014
(51) Int. Cl.: B41D 7/00, B23K 26/00, B41C 3/04, B41K 1/36, B41K 1/38, B23K 26/10

(54) **STEMPELPLATTENROHLING UND VERFAHREN ZUM ERSTELLEN EINER TEXTPLATTE FÜR EINEN STEMPEL**
DIE PLATE BLANK AND METHOD FOR PRODUCING A DIE PLATE
EBAUCHE DE PLAQUE DE TAMPON ET PROCEDE POUR FABRIQUER UN PLAQUE-TEXTE POUR UN TAMPON

(30) Priorität: 15.05.2013 AT 4022013
(43) Veröffentlichungstag der Anmeldung: 06.04.2016
(73) Patentinhaber: Trodat GmbH, 4600 Wels (AT)
(72) Erfinder: PINOT, Jean-Philippe, F-94210 La Varenne Saint Hilaire (FR); VERRIER, Stéphanie, F-94880 Noiseau (FR)
(86) Internationale Anmeldenummer: PCT/AT2014/050115
(87) Internationale Veröffentlichungsnummer: WO 2014/183143

(56) Entgegenhaltungen:
- EP-A1- 1 082 222
- WO-A1-01/81094
- WO-A1-98/53371
- WO-A1-2004/085110
- DE-A1- 19 747 877
- KR-A- 20100 124 538
- US-A- 5 460 757
- US-B1- 6 822 192

## Beschreibung

Die Erfindung betrifft einen Stempelplatten-Rohling und ein Verfahren zum Erstellen einer Textplatte, wie in den Oberbegriffen der Ansprüche 1 und 9 beschrieben.

Aus der WO 01/81094 A1 ist das Prinzip des Aufklebens einer Stempelplatte auf einen ebenen Fläche eines Körpers gezeigt, bei dem der Gummi zuerst vorzugsweise über einen Laserplotter graviert und ausgeschnitten wird.

Weiters ist aus der WO 99/61248 A1 und der WO 98/53371 A1 ein System zum Erzeugung einer Textplatte gezeigt.

Aus der US 5 460 757 A ist zu entnehmen, dass ein flexibles Grundmaterial auf einen Bearbeitungstisch aufgelegt wird, worauf über einen Laser die Bearbeitung der Oberfläche erfolgt. Hierbei wird der Stempelplattenrohling beliebig ohne Jig in den Bearbeitungsraum eingelegt, worauf anschließend vor der Bearbeitung der Laser manuell positioniert wird. Nachteilig ist hierbei, dass hierfür ein geschultes Personal erforderlich ist, da die Positionierung des flexiblen Stempelplattenrohlings ebenflächig erflogen muss und gleichzeitig die Startposition immer neu eingestellt werden muss.

Aus der US 6 822 192 B1 ist ein Laser zum Gravieren von keramischen Gegenständen, insbesondere Fließen, bekannt, ein harter, nicht flexibler Gegenstand, wie die Fliese, in das Bearbeitungsgerät, insbesondere den Laser, einfach eingelegt wird, ohne dass dabei irgendwelche Vorkehrungen beachtet werden müssen. Dabei gibt ein sogenanntes Jig (Positionsrahmen) die Position im Laser für die Fliese vor. Da der zu bearbeitende Gegenstand aus einem nicht flexiblen Material besteht, ist das einlegen, positionieren und herausnehmen bei derartigen Geräten problemlos möglich.

Eine ähnliche Anwendung ist aus der WO 2004/085110 A bekannt, bei der wiederum der Gegenstad in den Bearbeitungsbereich eingelegt wird, wogegen aus der KR 2010/0124538 A zu entnehmen ist, dass ein nicht flexibler Gegenstand in einem Rahmen, insbesondere einem sogenannten Jig, eingelegt werden kann. Auch ist aus der DE 197 47 877 A ein Stempel, ein Verpackungsmittel für einen Stempelrohling und Vorrichtung sowie Verfahren zur Herrstellung einer Stempelfläche bekannt, das ein Verpackungsmittel für einen Stempelflächenrohling zur Befestigung an einem Stempel betrifft, das durch einen lichtdurchlässigen Behälter gekennzeichnet ist und eine Vorrichtung und Verfahren zum Reinigen des Stempelflächenrohlings durch Ultraschall umfasst.

Aus dem Stand der Technik sind System bekannt, bei denen von speziell geschultem Fachpersonal, sogenannten Stempelmachern, Stempelplatten bzw. Textplatten für Stempel, insbesondere Handstempel, erstellt werden. Dazu wird von dem Fachpersonal an einem Computer unter zu Hilfenahme von standardisierter Software, insbesondere Corel-Draw, Word, usw., ein Stempelabdruck durch Grafiken und/oder Texte entsprechend den Wünschen des Kunden erstellt. Daraufhin werden die Daten an ein Bearbeitungsgerät, insbesondere einen Laserplotter, oder eine Steuerung hierfür übertragen, worauf eine Konvertierung der Daten bevorzugt unter zu Hilfenahme von hinterlegten Daten u/o Tabellen erfolgt. Anschließend legt das Fachpersonal einen sogenannten Rohling, der aus einem flexiblen Gummi gebildet ist, in die Bearbeitungsvorrichtung, worauf eine manuelle und oder automatische Positionierung des Bearbeitungsgerätes, insbesondere einer Strahlquelle eines Lasers, erfolgt. Das Fachpersonal startet daraufhin den Bearbeitungsvorgang, sodass ein Negativabdruck des vom Fachpersonal am Computer erstellten Stempelabdrucks am Rohling erzeugt wird. Nachdem der Bearbeitungsvorgang beendet ist, entnimmt das Fachpersonal den Rohling und reinigt diesen von den Bearbeitungsrückständen. Anschließend wird der negative Stempelabdruck auf den Druckplattenträger, an dem bereits eine Klebeschicht angeordnet ist, aufgeklebt oder es schneidet das Fachpersonal ein doppelseitiges Klebeband zurecht und klebt es auf den Rohling bzw. die negative Stempelplatte und die Stempelplatte anschließend auf den Druckplattenträger ohne Klebeschicht des Stempels, sodass der fertige Stempel an den Kunden verschickt werden kann.

Nachteilig ist hierbei, dass der derzeitige Ablauf sehr kompliziert verläuft und dafür immer ein Fachpersonal für die Bedienung der Software und des Bearbeitungsgerätes notwendig ist.

Ein wesentlicher Nachteil liegt auch darin, dass der Kunde nicht beim Kauf des Stempels gleich den Stempel mit der gewünschten Stempelplatte mit nach Hause nehmen kann, sondern der Kunde eine Karte mit dem gewünschten Text einsenden muss, sodass einige Zeit später der Stempel mit der montierten Stempelplatte dem Kunden zugesendet wird oder er die fertige Stempelplatte zugesendet bekommt, die der Kunde dann selbst auf den Druckplattenträger kleben muss.

Weiters ist aus dem Stand der Technik der Anmelderin ein Bestellvorgang bzw. eine Online-Shop-Lösung namens "uTypia" bekannt, bei dem der Kunde über einen Computer eine Textplatte bestellen kann, die ihm anschließend zugesandt wird.

Nachteilig ist hierbei, dass der Kunde erst einige Zeit später den Stempel oder die Stempelplatte erhält. Weiters ergibt sich hieraus auch der Nachteil, dass Änderungswünsche am Stempelabdruck, die sich oft erst beim Stempeln ergeben, nicht unmittelbar umgesetzt werden können, sondern der Online-Bestellvorgang neuerlich vorgenommen werden muss. Zudem muss beim Online-Bestellvorgang der vom Kunden erstellte Stempelabdruck nochmals von einem Fachpersonal, insbesondere Stempelmacher, überprüft werden und kann es vorkommen, dass von diesem noch geringfügige Anpassungen vorgenommen werden müssen, die mit dem Kunden nicht abgestimmt sind oder in einem weiteren Zwischenschritt erst noch abgestimmt werden müssen.

Die Aufgabe der Erfindung liegt darin, einen Stempelplatten-Rohling, sowie ein Verfahren zu schaffen, bei denen die Bedienung sehr vereinfacht wird und möglichst viele Fehlerquellen vermieden werden.

Darüber hinaus liegt die Aufgabe der Erfindung darin, die bekannten Nachteile aus dem Stand der Technik zu vermeiden und zu verbessern.

Vorteilhaft ist bei der beschriebenen Erfindung, dass dadurch ein Aufbau geschaffen wird, bei dem kein Fachpersonal erforderlich ist. Hierbei ist es ausreichend, wenn ein Verkäufer vor Ort eingeschult wird, der die einzelnen Arbeitsschritte durchführen kann, da alle Komponenten besonders bedienerfreundlich ausgestattet sind. Weiters ist es von Vorteil, dass der Kunde direkt an der Entstehung seiner Stempelplatte teilnehmen kann, in dem er zuerst den Stempelabdruck vor Ort kreiert und anschließend beobachten kann, wie der Stempelabdruck erzeugt wird. Somit ist es möglich, dass der Kunde beispielsweise dann, wenn ihm der fertige Stempelabdruck nicht gefällt, Änderungen vornehmen kann und eine neue Bearbeitung einleiten kann. Der Kunde kann auch innerhalb weniger Minuten seinen Stempel mit dem erstellen Stempelabdruck mit nach Hause nehmen und muss nicht, wie aus dem Stand der Technik, einige Tage warten. Ein wesentlicher Vorteil liegt vor allem darin, dass der Kunde selbst das Layout vor Ort durch einfache Hilfsmittel in der Software entwickeln kann.

Die Aufgabe der Erfindung wird durch einen Stempelplattenrohling gemäß Anspruch 1 gelöst.

Vorteilhaft ist hierbei, dass durch die Anordnung des Grundmaterials auf einer stabilen Grundplatte sichergestellt wird, dass die Oberfläche des Grundmaterials ebenflächig ausgebildet ist, d.h., dass beim Einlegen keine Unebenheiten, wie dies beim Stand der Technik der Fall sein kann, auftreten können. Auch wird damit erreicht, dass durch einen derartigen Aufbau immer der gleiche Abstand zum Bearbeitungskopf eines Bearbeitungsgerätes, insbesondere einer Fokussiereinheit eines Laserplotters, sichergestellt ist. Somit können Fehlbearbeitungen durch unterschiedliche Höhen des Grundmaterials ausgeschlossen werden. Ein weiterer wesentlicher Vorteil liegt darin, dass durch die Verwendung einer Grundplatte ein wesentlicher Sicherheitsfaktor bei der Laserbearbeitung gegeben ist, da beim Bearbeiten, insbesondere Schneiden des Grundmaterials, nunmehr eine zusätzliche Schicht zwischen Bearbeitungseinlage und Grundmaterial vorhanden ist, sodass eine Zerstörung der Bearbeitungseinlage, insbesondere des Trays, bei ungenauer Höheneinstellung einfach verhindert wird, d.h., dass der Laser beim Durchschneiden des Grundmaterials nicht sofort auf die Bearbeitungseinlage gelangt, sondern der Strahl zuerst auf die Grundplatte des Stempelplatten-Rohlings trifft, sodass lediglich die kostengünstige Grundplatte durch den Laser zerstört werden kann. Somit ist es nicht mehr erforderlich, dass eine exakte Einstellung der Höhe des Bearbeitungstisches von einem Fachpersonal durchgeführt werden muss, sondern kann dies automatisch erfolgen, da ausreichend Spielraum für die Höheneinstellung vorhanden ist. Auch werden die Handlingeigenschaften durch einen derartigen Aufbau eines Rohlings verbessert.

Die Ausbildung, dass das flexible Grundmaterial bevorzugt aus einem silikonhaltigen Kunststoff, insbesondere Gummi, besteht, ist insofern von Vorteil, da dadurch eine sehr gute und exakte Bearbeitung beispielsweise mit einem Laserplotter möglich ist. Damit wird eine sehr hohe Qualität bei der Herstellung des Stempelabdruckes erreicht.

Vorteilhaft ist auch eine Ausbildung, bei der die Grundplatte Mittel zum Führen in einer korrespondierenden Ausnehmung einer Bearbeitungseinlage aufweist, da dadurch die Positionierung des Rohlings sehr vereinfacht wird. Damit kann auch sicher gestellt werden, dass ohne Fachpersonal der Rohling an der richtigen Stelle zur Bearbeitung positioniert wird.

Dabei ist eine Ausbildung von Vorteil, bei der zur Bildung eines seitlichen Randes, insbesondere seitlicher Führungsbahnen, das flexible Grundmaterial kleiner als die Grundplatte ausgebildet ist, da dadurch eine einfache und kostengünstige Herstellung möglich wird.

Bei einer Ausgestaltung, bei der der Stempelplatten-Rohling zum Einlegen in eine Bearbeitungseinlage, insbesondere Tray oder Jig, zum weiteren Bearbeiten ausgebildet ist, wird erreicht, dass damit zwei korrespondierende Teile geschaffen werden, sodass das Einlegen und Herausnehmen des Rohlings ohne Vorkenntnisse durchgeführt werden kann.

Die Ausgestaltung, bei der die Grundplatte auf zumindest einer Seite Positioniermittel zum Anbringen des flexiblen Grundmaterials und/oder zum Positionieren in einer Bearbeitungseinlage, insbesondere einem Tray oder Jig, aufweist, ist von Vorteil, da dadurch eine exakte Positionierung des Rohlings durchgeführt werden kann. Damit wird auch erreicht, dass der Kunde oder Verkäufer beim Einlegen des Rohlings eine Rückmeldung bekommt, da eine Art Schnappverbindung zum Positionieren realisiert wird.

Von Vorteil ist auch eine Ausbildung, bei der für unterschiedliche Stempelabdruckformen, insbesondere runde, ovale, dreieckige, die Grundplatte rechteckförmig oder quadratisch ausgebildet ist oder dass bei angepassten Stempelabdruckformen Führungen zur Aufnahme in der Bearbeitungseinlage angeordnet sind, da dadurch in einer Ausnehmung mehrere unterschiedliche Rohlinge mit bevorzugt unterschiedlichen Formen eingelegt werden können. Damit wird eine erhebliche Platzeinsparung bei der Bearbeitungseinlage erreicht, sodass diese nicht mehr so oft getauscht werden muss.

Die Aufgaben der Erfindung werden auch durch ein Verfahren zum Erstellen einer Textplatte nach Anspruch 9 gelöst.

Vorteilhaft ist hierbei, dass der Nutzer, insbesondere der Käufer, vor Ort die Größe des Stempels oder den Stempeltyp selbst auswählen kann und anschließend das Layout erstellen kann. Somit kann der Nutzer direkt auf das Aussehen des Stempelabdruckes Einfluss nehmen. Ein wesentlicher Vorteil liegt darin, dass nach dem Abwickeln des Kaufes bzw. des Layoutens der Nutzer bzw. Käufer den fertigen Stempel mit der vor Ort erzeugten Stempelplatte mit nach Hause nehmen kann. Dabei kann er direkt den Bearbeitungsvorgang beobachten, wodurch es möglich ist, dass bis kurz vor dem Bearbeitungsstart der Kunde noch Einfluss nehmen kann. Ein besonderer Vorteil liegt darin, dass oftmals bei Grafiken an der Stempelplatte die Abdruckqualität beim Erstentwurf nicht passt, sodass die Auflösung nachbearbeitet werden muss. Dies kann bei einer Vorort-Produktion direkt erfolgen, sodass der Kunde keine bösen Überraschungen mehr hinnehmen muss, wie dies beim Stand der Technik oftmals der Fall ist, wo der Kunde die Stempelplatte oder den Stempel später zugesendet bekommt.

Bei einem Vorgehen, bei dem vor der Erstellung des Stempelabdruckes oder nach der Erstellung des Stempelabdruckes die Kosten für die Erstellung und/oder den dazupassenden Stempel dem Nutzer angezeigt wird, sieht der Kunde sofort, was ihm der Stempel kostet. Somit können unerwünschte Kostenfallen vermieden werden.

Schließlich ist ein Vorgehen von Vorteil, bei dem vom Steuergerät und/oder dem Bearbeitungsgerät vor dem Bearbeitungsvorgang überprüft wird, ob die Einlage, insbesondere der Stempelplatten-Rohling, in der richtigen Ausnehmung der Bearbeitungseinlage eingelegt ist, da dadurch eine Fehlerquelle ausgeschaltet werden kann. Insbesondere bei derart vielen Ausnehmungen ist es von Vorteil, wenn eine vollautomatische Überwachung durchgeführt wird, da dadurch die Zerstörung der Bearbeitungseinlage verhindert wird.

Die Erfindung wird anschließend in Form von Ausführungsbeispielen beschrieben, wobei darauf hingewiesen wird, dass die Erfindung nicht auf die dargestellten und beschriebenen Ausführungsbeispiele bzw. Lösungen begrenzt ist.

Es zeigen:
- Fig.1: ein Übersichtschaubild eines Systems zur Bearbeitung von Werkstücken und Erzeugung von Textplatten;
- Fig.2: eine schematische, vereinfachte Darstellung einer Eingabemaske an einem Eingabegerät für einen Verfahrenablauf zum Erstellen und Erzeugen einer Stempelplatte;
- Fig.3-13: weitere schematisch, vereinfachte Darstellung von Eingabemasken nach Fig. 2;
- Fig.14: eine perspektivische Darstellung eines Stempelplatten-Rohlings, in vereinfachter, schematischer Darstellung;
- Fig.15: eine Schnittdarstellung durch den Stempelplatten-Rohling gemäß XIV-XIV, in vereinfachter, schematischer Darstellung;
- Fig.16: ein Ausführungsbeispiel zu den Fig. 15 und 16 eines Stempelplatten-Rohlings, geschnitten und in vereinfachter, schematischer Darstellung;
- Fig.17: ein weiteres Ausführungsbeispiel in perspektivischer Darstellung des Stempelplatten-Rohlings, in vereinfachter, schematischer Darstellung;
- Fig.18: eine Schnittdarstellung durch den Stempelplatten-Rohling gemäß XVIII-XVIII in Fig. 17;
- Fig.19: ein Ausführungsbeispiel zu dem Stempelplatten-Rohling der Fig. 17 und 18, geschnitten und in vereinfachter, schematischer Darstellung;
- Fig.20: ein weiteres Ausführungsbeispiel zu dem Stempelplatten-Rohling der Fig. 17 bis 19, geschnitten und in vereinfachter, schematischer Darstellung;
- Fig.21: ein anderes Ausführungsbeispiel eines Stempelplatten-Rohlings gemäß den Fig. 14 bis 21, in vereinfachter, schematischer Darstellung;
- Fig.22: eine Schnittdarstellung des Ausführungsbeispiels nach Fig. 21, in vereinfachter, schematischer Darstellung;
- Fig.23: ein weiteres Ausführungsbeispiel eines Stempelplatten-Rohlings mit einem Halterahmen, in vereinfachter, schematischer Darstellung;
- Fig.24: eine Draufsicht auf eine Bearbeitungseinlage mit Ausnehmungen für den Stempelplatten-Rohling für ein Bearbeitungsgerät, in vereinfachter, schematischer Darstellung;
- Fig.25: eine Schnittdarstellung der Länge durch eine Ausnehmung der Bearbeitungseinlage nach Fig.24, in vereinfachter, schematischer Darstellung;
- Fig.26: eine weitere Schnittdarstellung quer durch eine Ausnehmung der Bearbeitungseinlage nach Fig. 24, in vereinfachter, schematischer Darstellung;
- Fig.27: eine Schnittdarstellung der Bearbeitungseinlage mit eingelegtem Stempelplatten-Rohling, in vereinfachter, schematischer Darstellung;
- Fig.28: eine weitere Schnittdarstellung der Länge der Bearbeitungseinlage mit eingelegtem Stempelplatten-Rohling;
- Fig.29: ein Ausführungsbeispiel der Bearbeitungseinlage mit eingelegtem Stempelplatten-Rohling, geschnitten und in vereinfachter, schematischer Darstellung;
- Figl.30: eine Draufsicht eines Ausführungsbeispiels einer Bearbeitungseinlage mit elektronischen Komponenten, in vereinfachter, schematischer Darstellung.

Einführend sei festgehalten, dass in den unterschiedlichen Ausführungsformen gleiche Teile mit gleichen Bezugszeichen bzw. gleichen Bauteilbezeichnungen versehen werden.

Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen.

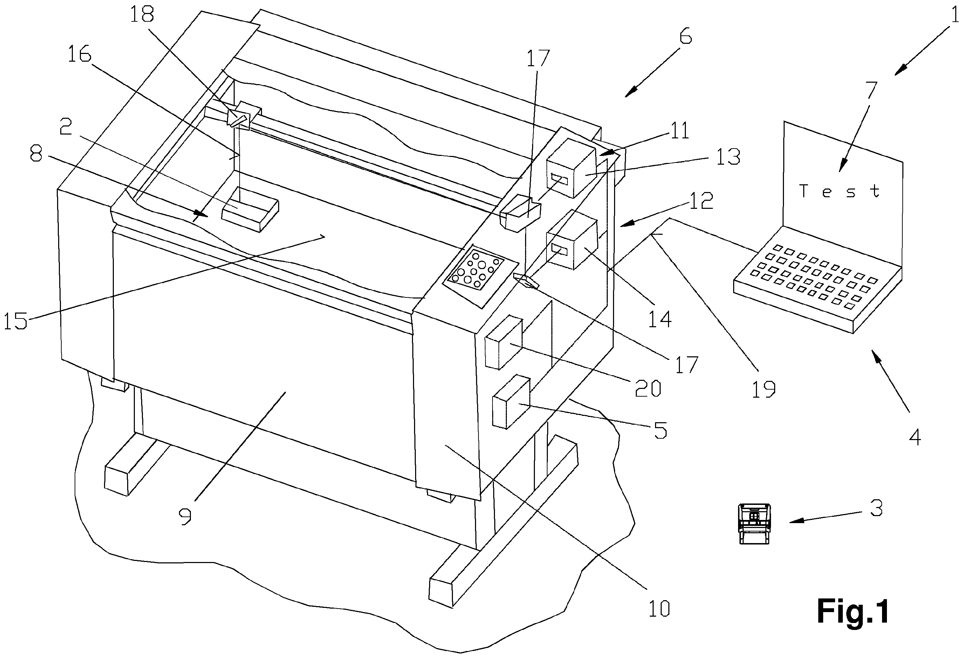

In Fig. 1 ist ein System 1 zum Durchführen eines Verfahrens zum Erstellen einer Textplatte 2, auch genannt Stempelplatte 2, für einen Stempel 3, insbesondere einen Handstempel gezeigt, das zumindest ein Eingabegerät 4, ein Steuergerät 5 und ein Bearbeitungsgerät 6 umfasst, wobei das Steuergerät 5 beispielsweise im Bearbeitungsgerät 6 u/o im Eingabegerät 4 angeordnet ist. Am Eingabegerät 4, das beispielsweise durch einen Laptop, Tablet-PC, Ipad, oder einen Verkaufsstand mit Touchscreen und/oder Eingabekomponenten, odgl., gebildet sein kann, wird vom Nutzer ein Stempelabdruck 7 erstellt, worauf der Stempelabdruck 7 an das Steuergerät 5 übergeben wird und von diesem oder dem Bearbeitungsgerät 6 der Stempelabdruck 7 derart umgewandelt wird, dass eine Ansteuerung des Bearbeitungsgeräts 6 zum Erstellen eines negativen Stempelabdrucks 7 auf einer Einlage 8 erfolgt. Selbstverständlich ist es auch möglich, dass die Umwandlung des erstellten Stempelabdrucks 7 in einem negativen Stempelabdruck 7 im Eingabegerät 4 erfolgt und die Daten u/o Informationen anschließend über Leitungen u/o leitungslos, insbesondere per WLan oder Bluetooth, übertragen werden.

Das Bearbeitungsgerät 6 ist in dem dargestellten Ausführungsbeispiel durch einen Laserplotter 9, auch Lasergravierer genannt, gebildet, bei dem in einem Gehäuse 10 mehrere, insbesondere zwei Strahlenquellen 11, 12 in Form von Lasern 13, 14 angeordnet und betrieben werden, die bevorzugt abwechselnd auf die darin eingelegte Einlage 8, insbesondere Silikoneinlage 8, oder das zu bearbeitende Werkstück, beispielsweise Kugelschreibe, Ipad, Iphone, usw., einwirken, wobei die Einlage 8 oder das Werkstück auf einem Bearbeitungstisch 15 definiert positioniert ist, und ein von der Strahlenquelle 11 oder 12 abgegebener Laserstrahl 16 über Umlenkelemente 17 an zumindest eine für beide Strahlenquellen 11 oder 12 ausgebildete verfahrbare Fokussiereinheit 18 gesendet wird, von der der Laserstrahl 16 in Richtung Werkstück oder Einlage 8 abgelenkt und zur Bearbeitung fokussiert wird. Die Steuerung, insbesondere die Positionssteuerung der Einlage 8 oder des Werkstückes zum Laserstrahl 16 erfolgt über eine in der Steuereinheit bzw. im Steuergerät 5, welches in dem gezeigten Ausführungsbeispiel im Laserplotter 9 integriert ist, laufende Software, wobei an dem externen Eingabegerät 4, insbesondere einem Computer oder einem Steuergerät 5 eine Grafik und/oder ein Text, wie schematisch am Computer dargestellt, erstellt wird, welche/r an das Steuergerät 5 des Laserplotters 9 über eine Datenverbindung 19 übergeben wird, die beispielsweise aus einer in einem Speicher 20 hinterlegten Datenbank eine Konvertierung der übergebenen Daten, insbesondere des Stempelabdrucks 7 mit Grafik und/oder Text, zum Steuern der einzelnen Elemente des Laserplotters 9 vornimmt. Auf den detaillierten mechanischen Aufbau eines derartigen Laserplotters 9 wird nicht mehr näher eingegangen, da dieser aus dem Stand der Technik, insbesondere aus der WO 1999/038643 A der Anmelderin, bereits bekannt ist und aus dieser entnommen werden kann.

Selbstverständlich ist es möglich, dass anstelle eines zweistrahligen Laserplotters 9 auch nur ein einstrahliger, also mit nur einer Strahlenquelle 11 ausgestatteter Laser 13, eingesetzt werden kann. Auch ist es möglich, dass mehrere Bearbeitungsgeräte 6 mit dem Eingabegerät 4 verbunden werden können, sodass je nach ausgewähltem Bearbeitungsgerät 6 oder Aufgabe oder Material die unterschiedlichsten Bearbeitungsgeräte 6 ausgewählt und aktiviert werden. Je nach Verwendung des Rohmaterials für eine Stempelplatte 2 ist auch ein anderes Bearbeitungsgerät 6, wie beispielsweise eine Fräsmaschine, möglich.

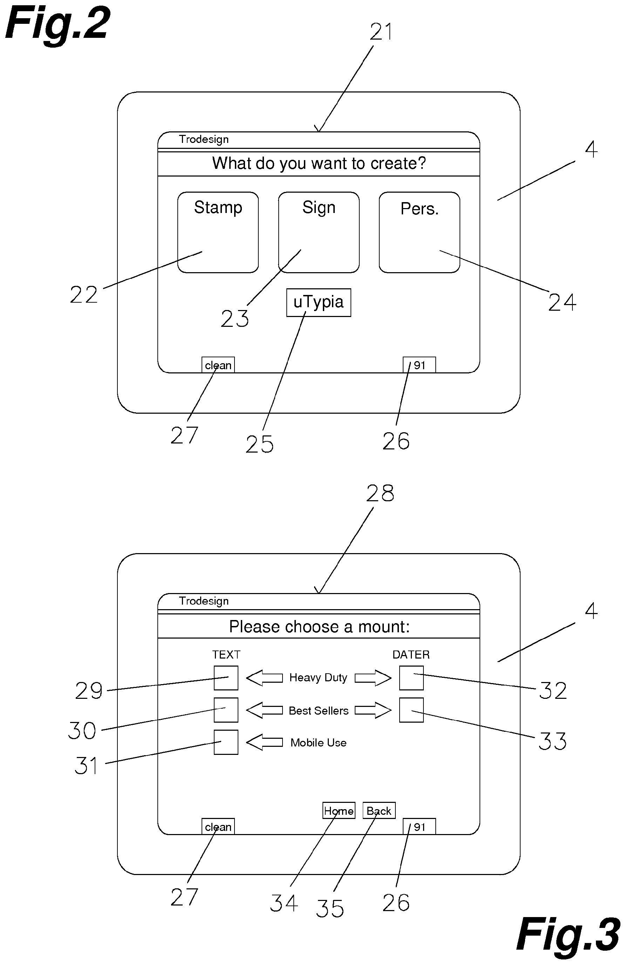

In den Fig. 2 bis 13 ist ein Ablauf zum Erstellen einer Textplatte 2 oder Stempelplatte 2 der am Eingabegerät 4, insbesondere am Bildschirm u/o Touchscreen, laufenden Software gezeigt, wie dies schematisch, vereinfacht dargestellt ist.

Aktiviert der Nutzer bzw. Kunde das Eingabegerät 4 so erscheint an dessen Bildschirm zuerst die Einstiegsmaske 21. In der Einstiegsmaske 21 sind die unterschiedlichen Funktionen, die über das System 1 bzw. das Bearbeitungsgerät 6 durchführbar sind, in Form von mit Bildern hinterlegten Eingabebuttons 22, 23, 24, 25 dargestellt. Weiters ist für den Betreiber oder Verkäufer eine Informationsanzeige 26 vorhanden, an der abgelesen werden kann, wie viele Aufträge bereits von Kunden durchgeführt wurden u/o Bestellungen vorliegen. Je nach Einstellung in der Software, insbesondere in den Einstellungen der Software, kann diese Informationsanzeige 26 auch dazu dienen, dass der Verkäufer die vorhanden bzw. eingegangene Online-Bestellungen, insbesondere von uTypia, von anderen Verkaufsstellen sehen kann, die er später abarbeiten kann. Auch ist es möglich, dass ein Clean-Button 27 vorhanden ist, wobei durch Drücken dieses Clean-Buttons 27 die Reinigungsfunktion, insbesondere eine Reinigungsbürste zum Reinigen der Textplatte 2 manuell aktivierbar ist.

Wie nunmehr in Fig. 2 dargestellt, sind bei den Eingabebuttons 22 bis 25 folgende Aktivitäten hinterlegt:

| | |
|---|---|
| Eingabebutton 22 | Erstellen einer Text-/Stempelplatte 2 |
| Eingabebutton 23 | Gravieren von Schildern |
| Eingabebutton 24 | Personalisieren deines Ipads/Tablett-PC |
| Eingabebutton 25 | Bestellung über uTypia |

Durch Aktivieren eines dieser Eingabebuttons 22 bis 25 durch den Kunden oder Verkäufer bzw. Betreiber wird am Eingabegerät 4 eine neue Bildschirmmaske geöffnet, sodass für die weiteren Schritte der Kunde oder Verkäufer/Betreiber bei der Eingabe der benötigten Daten unterstützt wird. Grundsätzlich ist es dabei möglich, dass bei den dargestellten Masken Bilder, Symbole, Fotos und dergleichen integriert sein können, die der Einfachheit halber jedoch weggelassen wurden.

Wird der Eingabebutton 22 aktiviert, so öffnet sich die Stempelauswahlmaske 28, wie besser in Fig. 3 dargestellt. Darin kann nunmehr der Kunde aus den verschiedensten Produkten 29 bis 33, die wiederum durch mit Bildern hinterlegten Schaltbutton dargestellt sind, auswählen. Hierbei ist die Auswahlmöglichkeit nicht nur auf die dargestellte Bildschirmmaske beschräkt, da diese durch Neueinführungen von Produkten oder Entnahme von Produkten ständig aktualisiert wird. Die Aktualisierung der Software bzw. einzelner Masken kann dabei vor Ort durch Einspielen von Updates erfolgen oder automatisch beispielsweise über das Internet erfolgen.

Durch Betätigen des Buttons 22 öffnet sich eine neue Bildschirmmaske am Eingabegerät 4. Dabei sind bei der dargestellten Bildschirmmaske Produktauswahlliste 28, gemäß Fig. 3, der Anmelderin beispielsweise zur Zeit folgende Produkte auswählbar:

| | |
|---|---|
| Produkt 29 | Stempel der Professional Serie (Profi) |
| Produkt 30 | Stempel der neuen Printy 4.0 Generation |
| Produkt 31 | Mobile Stempel |
| Produkt 32 | Datums-Stempel Profi |
| Produkt 33 | Datums-Stempel P4 |

Zu den einzelnen Produkten 29 bis 33 können auch entsprechende Abbildungen/Symbolbilder (nicht dargestellt) in den Buttons angeordnet sein. Weiters sind zwei Funktions-Buttons 34, 35 vorhanden, bei denen es sich einerseits um den Funktions-Button Home 34 handelt, bei dem der Nutzer durch Betätigen auf die Einstiegsmaske 21 zurück gelangt und andererseits um den Funktions-Button Back 35, bei dem der Nutzer auf die vorhergehende Maske zurück gelangt. Diese beiden Funktions-Buttons 34, 35 können auf jeder verfügbaren Maske angeordnet sein.

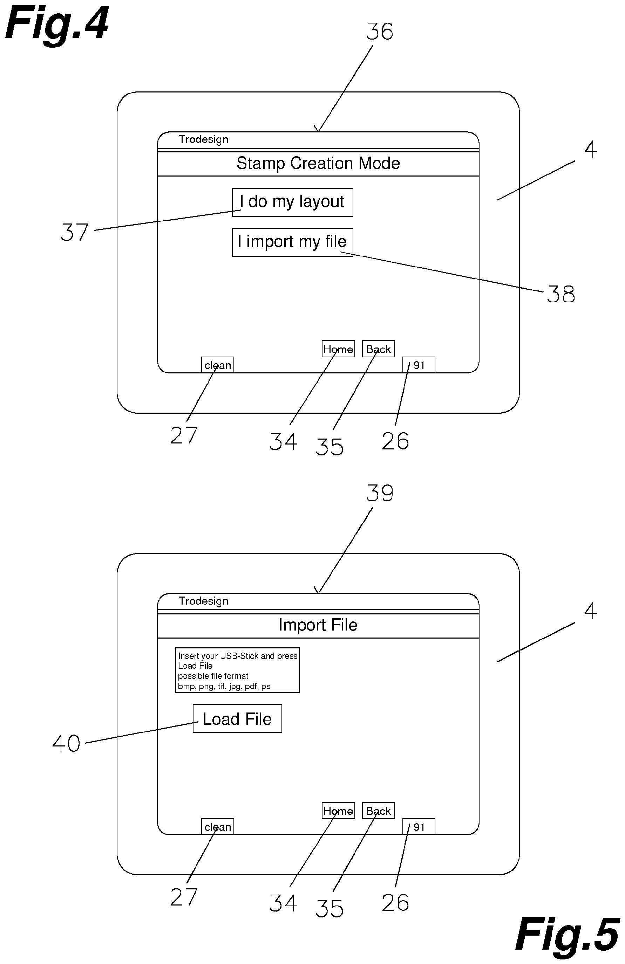

Wählt der Nutzer nunmehr eine Stempeltype durch Betätigen des entsprechenden Produktes 29 bis 33 aus, so öffnet sich eine neue Maske, insbesondere die "Stamp Creation Mode" Maske 36, gemäß Fig. 4. Bei dieser Maske 36 kann der Kunde nunmehr entscheiden, ob er ein Layout erstellen möchte oder sein bereits zu Hause erstelltes Layout in das Eingabegerät 4, insbesondere einen Rechner bzw. Computer, eingibt, wozu ein "I do my layout" Button 37 und "I import my file" Button 38 angeordnet sind.

Drückt der Nutzer den Button 38 so öffnet sich das Fenster Import File 39, gemäß Fig. 5. Darin kann nunmehr der Nutzer entnehmen, welche Daten in welchem Format er importieren kann. Insbesondere können Daten im Format "bmp, png, tif, pdf, ps" eingespielt werden, wozu der Nutzer beispielsweise einen USB-Stick an einem USB-Anschluss des Eingabegerätes 4 ansteckt bzw. verbindet. Betätigt er anschließend den Load File Button 40 so öffnet sich beispielsweise ein Datei-Manager, sodass der Nutzer die entsprechenden Daten auswählt, die anschließend importiert werden. Selbstverständlich ist es möglich, dass eine automatische Datenerkennung durchgeführt wird, wobei bei mehreren möglichen Datenformaten am Speichermedium, insbesondere dem USB-Stick, eine Liste zur Auswahl vorgeschlagen wird. Es ist auch möglich, dass am USB-Anschluss eine externe Festplatte oder andere Speichermedien angeschlossen werden können. Auch können bei vorhandenen Laufwerken Plattenspeicher, insbesondere CD-Rom, Blue-Ray, Mini-Disk usw. verwendet werden.

Durch entsprechende Integration eines Mail-Servers ist es auch möglich, dass der Nutzer von seinem Handy, insbesondere Smartphone, die Daten, insbesondere den erstellten Stempelabdruck 7 oder Bilder/Grafiken/Texte an das Eingabegerät 4 sendet. Hierzu wird bei entsprechender Auswahl der Funktion, die beispielsweise wiederum über einen Button (nicht dargestellt) erfolgen kann, eine entsprechende Mailadresse angezeigt. Diese kann jedoch auch direkt im Layout der Software integriert sein. Auch besteht die Möglichkeit die Daten/Bilder/Texte über eine WLan, Infrarot-Schnittstelle oder Blue-Tooth Verbindung an das Eingabegerät 4 zu übertragen.

Bevorzugt wird bei einem Vorgehen über einen Mailserver dem Kunden ein Antwort-Mail mit einem Code/Passwort übersendet, sodass beim Öffnen des entsprechenden Mails am Eingabegerät 4 am Bildschirm bzw. Touchscreen des Eingabegerätes 4 eine Passwort-/Code-Abfrage durchgeführt wird, bevor der Kunde das Mail öffnen kann. Somit wird vermieden, dass ein Kunde ein Mail eines anderen Kunden öffnen kann. Weiters ist es möglich, dass der Kunde sein Mail selbstständig löschen kann oder dass im Eingabegerät 4 hinterlegt wird, wie lange die Mail gespeichert bleibt. Auch ist es möglich, dass bei Übersendung einer Mail an das Eingabegerät 4 das Eingabegerät 4, insbesondere die Software, eine Antwortmail sendet, in der der Kunde zur Freigabe des Mails, insbesondere durch einen Freigabelink, aufgefordert wird. Eine Möglichkeit besteht auch darin, dass der Kunde ein eigenes Passwort mit dem Mail versendet, das er anschließend am Eingabegerät 4 eingeben muss.

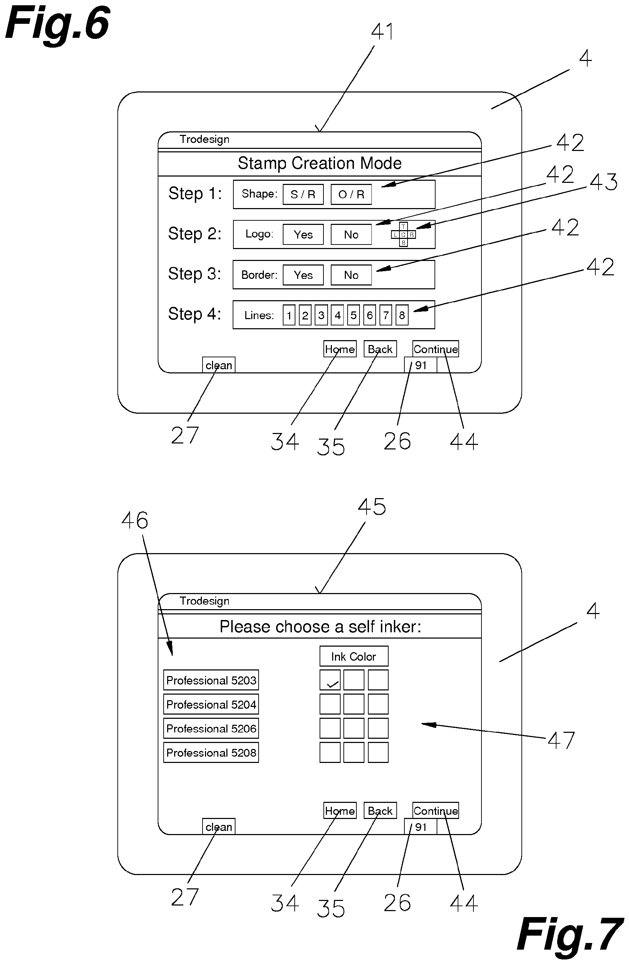

Nachdem der Kunde seine Daten, Texte oder Grafiken importiert hat, kann er nunmehr, gemäß Fig. 4, durch Betätigen des Buttons 37 in der Erstellung der Textplatte 2 weiter fortfahren. Dabei öffnet sich nunmehr ein neues Eingabefenster 41 "Stamp Creation Mode", wie in Fig. 6 dargestellt.

Hier muss der Kunde nunmehr mehrere Schritte "Step 1 bis 4" durchführen. Zu den einzelnen Schritten sind nunmehr mehrere Auswahlbuttons 42 angeordnet. Diese Auswahlbuttons 42 sind bevorzugt derart ausgebildet, dass beim Anklicken bzw. Aktivieren diese ihre Farbe u/o Aussehen verändern, sodass der Kunde erkennen kann, was er ausgewählt hat. Im ersten Schritt "Step 1" kann der Kunde zwischen einem quadratischen/rechteckförmigen "S/R" oder ovalen/runden "O/R" Plattenformat wählen. "Step 2" kann über "JA oder NEIN" gewählt werden, ob ein Logo (Bild/Grafik) verwendet wird oder nicht. Zusätzlich kann der Kunde die Position über die Positionstasten 43 " T=top, R=right, B=bottom, L=left und C=center" wählen. Im dritten Schritt "Step 3" ist wiederum eine Auswahl möglich und zwar ob der Kunde einen Rand bzw. Umrandung oder keine möchte, was er über die Yes oder No auswählen kann. Der letzte Schritt in diesem Eingabefenster 41 beinhaltet die Festlegung der benötigten Zeilen "Lines" für die Textplatte 2, d.h., dass der Kunde durch Aktivieren einer dieser Zahlen die entsprechende Zeilenzahl zur Verfügung gestellt bekommt. Wählt der Kunde beispielsweise die Zahl 2, so hat er die Möglichkeit in zwei Zeilen einen Text einzugeben, wogegen bei der Zahl 3 drei Zeilen usw. vorhanden sind.

Da bei dieser Seite bzw. Maske der Kunde über die Schaltflächen nur auswählen kann, muss der Kunde den Button 44 "Continue" betätigen um die nächste Maske 45 "Please choose a self inker", gemäß Fig. 7, aufzurufen und mit der Eingabe fortfahren zu können. Auf dieser Seite bekommt der Kunde die Informationen, welche Stempelgrößen 46 für den auf der Stempelauswahlmaske 28 gewählten Stempeltypen (Produkt 29 bis 33) zur Verfügung stehen. Hat der Kunde auf der Seite 28 das Produkt 29 "Professional" gewählt, dann stehen ihm beispielsweise die angezeigten Stempelgrößen 46 "Professional 5203, 5204, 5206, 5208" zur Verfügung, wogegen beim Produkt 30 die Stempelgrößen 46 "Printy 4910, 4911, 4912, 4913, 4914, 4915" (nicht dargestellt), usw., zur Verfügung stehen würden. Je nach dem, was bei der Stempelauswahlmaske 28 ausgewählt wurde, werden dem Kunden nunmehr die vorhandenen Produktgrößen und/oder Ausführungen bei dieser Maske 45 gezeigt. Weiters kann der Kunde an dieser Maske nunmehr die Farbe über die Farbauswahlbuttons 47 auswählen, wobei beispielsweise, wie dargestellt, bei Auswahl einer Farbe ein kleines Symbol, insbesondere ein Hackerl, im Farbauswahlbutton 47 erscheint. Selbstverständlich ist es möglich, dass sich auch hier die Farbe u/o das Aussehen des aktivierten Farbauswahlbuttons 47 verändert. Bei diesem Ausführungsbeispiel sind für die Professional-Serie die Farben "blau, schwarz und rot" verfügbar, aus denen der Kunde wählt. Auch ist es möglich, dass der Kunde mehrere Farben einer Stempelgröße 46 auswählt, sodass ein sogenannter "Multi-Color-Stempel" erzeugt wird. Es ist auch möglich, dass zusätzlich Bilder der unterschiedlichen Größen der Stempel 3 u/o deren Abdruckgrößen dargestellt sind. Dabei ist es auch möglich, dass bei den zuvor oder noch zu beschreibenden Masken verschiedenste Untermasken, Auflistungen, usw., die nicht dargestellt sind, ausgeführt und aufgerufen werden. Beispielswiese können für einen Multi-Color Stempel weitere Farbauswahlmasken odgl. geöffnet werden.

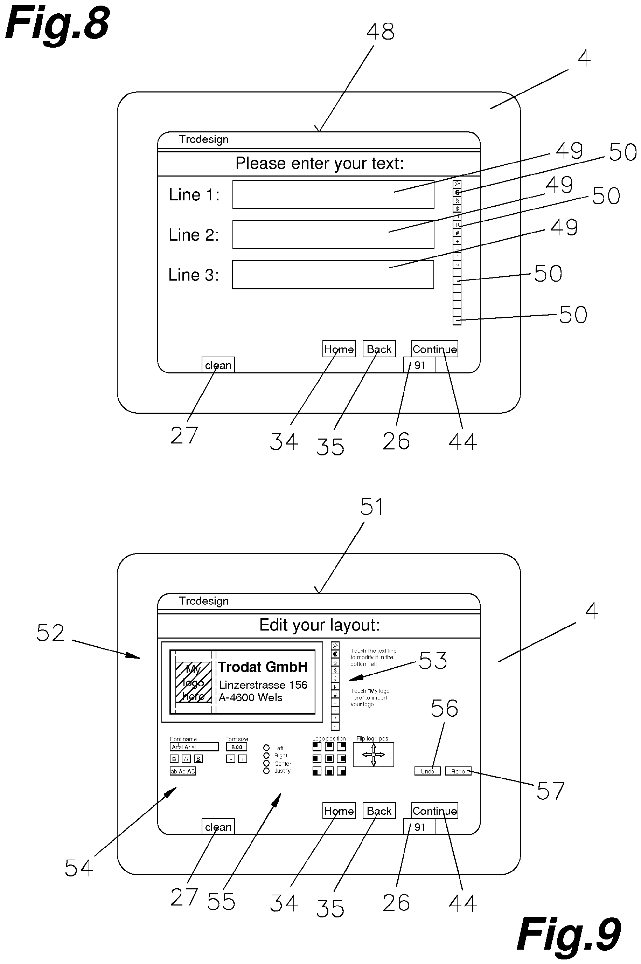

Nachdem der Kunde die Farbe ausgewählt hat, betätigt er wiederum den Button 44 "Continue" um mit den Einstellungen fortzufahren. Daraufhin erscheint die Texteingabemaske 48 "Please enter your text:", gemäß Fig. 8. Darin werden nunmehr so viele Zeilen "Line 1 bis ..." angezeigt, wie der Kunde in der Eingabemaske 41 definiert hat. In diesem dargestellten Beispiel wurden in der Eingabemaske 41 die Zahl 3, also drei Zeilen, ausgewählt, sodass nunmehr die Line 1 bis 3 dargestellt werden. Neben der Beschriftung "Line 1, Line 2, Line 3" ist nunmehr jeweils ein Eingabefeld 49 angeordnet. Bei dem Eingabefeld kann der Kunde über ein Eingabemittel beispielsweise in Form von einer Tastatur einen Text eingeben. Es ist auch möglich, dass an der Maske 48 entsprechende Zeicheneingabebuttons 50 dargestellt sind, die bei Aktivierung das entsprechend dargestellte Symbol in der aktiven Zeile einfügen. Selbstverständlich ist es möglich, dass eine ganze Tastatur abgebildet sein kann. Es ist auch möglich, dass sich bei speziellen Symbolen, wie beispielsweise bei den "Smile", Unterfenster (nicht dargestellt) öffnen, aus denen mehrere derartige oder ähnliche Symbole ausgewählt werden können. Kommt der Kunde beim Erstellen des Textes drauf, dass er beispielsweise noch eine Zeile benötigt oder eine Zeile zu viel hat, so kann er mit dem "Back"-Button 35 zurück springen und im Eingabefenster 41 die Zeilenzahl neu definieren. Selbstverständlich ist es möglich, dass auch eine Korrektur-Taste oder eine direkt Zurückspringtaste auf das Eingabefenster 41 angeordnet sein kann. Auch ist es möglich, dass die Zeilen mit einem Lösch-Button gelöscht werden können oder mit einem Hinzufüge-Button eine oder mehrere Zeilen hinzugefügt werden können.

Betätigt der Kunde den "Continue"-Button 44 so kommt ein neues Fenster 51 "Edit your layout", worin nunmehr dem Kunden das Layout 52 der Stempelpatte 2 gezeigt wird, welches er hier noch verändern bzw. anpassen kann. In diesem Fenster 51, gemäß Fig. 9, stehen dem Kunden wiederum sämtliche Einstellmöglichkeiten zur Verfügung die in verschiedenste Bereiche 53 "Sonderzeichen", 54 "Textformatierung", 55 "Logo-Positionierung" zusammen gefasst sind, wobei auf die einzelnen Funktionen nicht näher eingegangen wird, da diese wie bei Textverarbeitungsprogrammen funktionieren. Dadurch kann der Nutzer aufgrund der Symbole sofort erkennen, welche Funktion dahinter steckt und was damit verändert wird. Beispielsweise kann durch Verändern des Font name "Arial" die Schriftart des Textes bei aktivierter erster Zeile geändert werden. Verändert der Kunde die Zahl bei "Font size" so wird beispielsweise die Textgröße geändert, usw. Wesentlich ist hierbei, dass dem Kunden die Möglichkeit geschaffen wird, dass er das fertige Layout 52 vor der Herstellung sieht und entsprechend verändern und anpassen kann, wobei der Kunde bei Veränderung durch Betätigen eines Buttons oder einer Eingabe dies sofort am Layout 52 wahrnehmen kann. Damit eine einfache Rücknahme einer Veränderung vorgenommen werden kann, sind zwei zusätzliche Buttons 56 "Undo" und 57 "Redo" vorgesehen, wo auf schnelle Weise der Kunde einen oder mehrere Schritte rückwirkend die Veränderungen wegnehmen kann. Somit bildet diese Maske 51 das Herzstück für die Bearbeitung mit direkten Auswirkungen auf das Design des Stempelabdrucks 7.

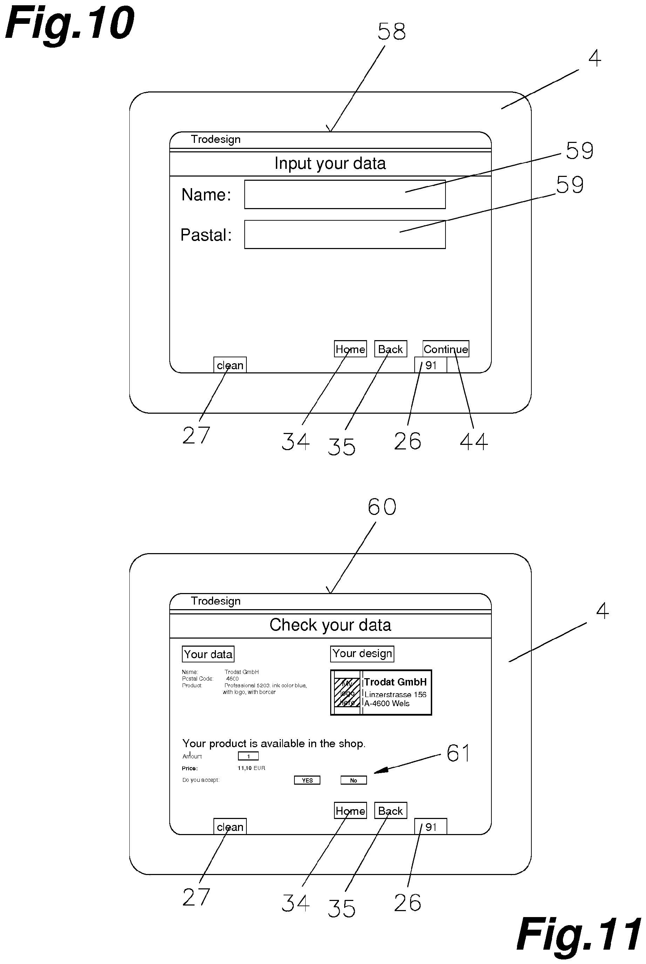

Ist der Kunde mit seinem Layout 52 einverstanden, so betätigt er wiederum den Button 44 "Continue" um mit der Erstellung der Text-/Stempelplatte 2 fortfahren zu können. Dabei ist es bei dem dargestellten Ausführungsbeispiel nunmehr der Fall, dass eine Kundendatenmaske 58, gemäß Fig. 10, geöffnet wird, in der der Kunde über zwei Eingabefelder 59 seinen Namen und die Postleitzahl/Wohnort eingeben kann. Hierbei ist es möglich, dass, wenn gewünscht, auch weitere Daten, wie beispielsweise die Adresse, Telefonnummer, Email, usw., erfasst werden können. Es ist auch möglich, dass der Kunde keine Daten eingibt und gleich über den Button 44 "Continue" auf die nächste Maske 60 "Check your data" springt, wie dies in Fig. 11 dargestellt ist.

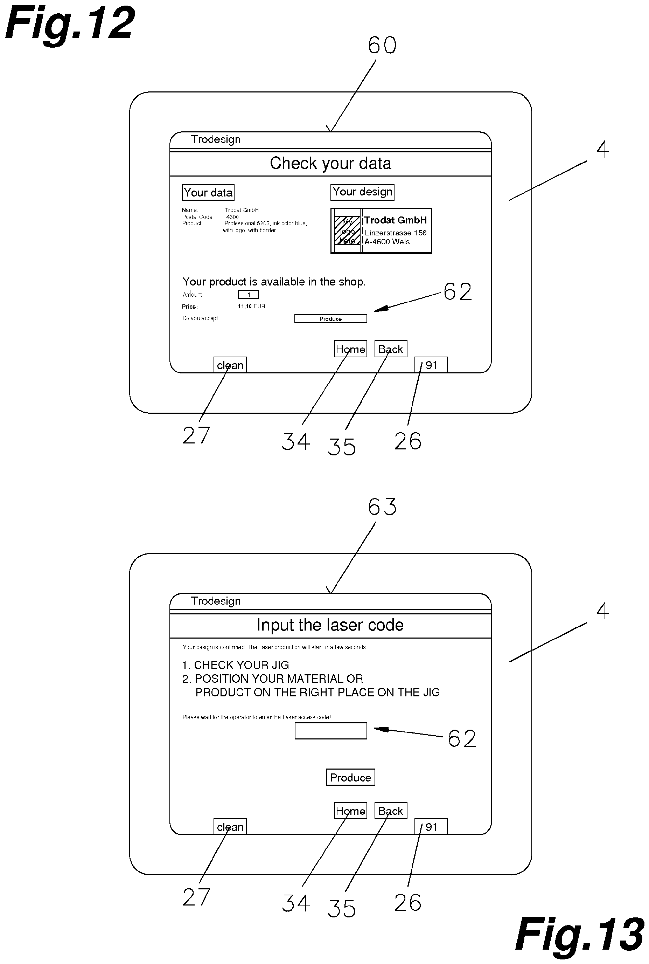

Diese Maske 60 hat die Funktion, den Kunden alle notwendigen Informationen und das Layout 52 nochmals mitzuteilen. Zusätzlich wird beim Öffnen dieser Maske 60 auch die Kosten unter "Price" berechnet und dargestellt, sodass dies dem Kunden mitgeteilt wird. Dies ist insofern wesentlich, da der Kunde bewusst den Preis zustimmen muss, wozu eine entsprechende Abfrage 61 mit "Yes oder No" hinterlegt ist. Betätigt der Kunde den No-Button der Abfrage 61 so wird der Vorgang beendet, wogegen bei "YES" die beiden Abfragebuttons 61 geändert werden und nunmehr ein neuer Button 62 "Produce", wie in Fig. 12 dargestellt, erscheint. Aktiviert der Kunde diesen Button 62, so wird nunmehr der Bearbeitungsvorgang aktiviert. Dazu ist es beispielsweise möglich, dass die notwendigen Komponenten erst jetzt mit Energie versorgt werden, sodass diese zuvor nur im Ruhezustand waren und somit Energie gespart wurde. Auch ist es möglich, dass dadurch eine Mitteilung an einen Verkäufer gesendet wird oder dass beispielsweise ein Anzeigeelement (nicht dargestellt) aktiviert wird.

Durch das Aktivieren des Button 62 "Produce" wird auf jeden Fall eine weitere Bildschirmmaske 63 "Input the laser code" aktiviert und angezeigt, wie dies in Fig. 13 ersichtlich ist. Diese Maske 63 beinhaltet einige Funktions- und Sicherheitshinweise und beinhaltet ein Eingabefeld 64 "laser access code". Selbstverständlich ist es hierbei möglich, dass diese Funktions- und Sicherheitshinweise auch automatisch überprüft werden können, wozu entsprechende Sensoren oder Eingabeaufforderungen, wie später noch erläutert, verwendet werden. Auch ist es möglich, dass die Hinweise in Form von Fragen dargestellt sind, die der Verkäufer oder Kunde bestätigen muss. Erst wenn alle sicherheitstechnischen Hinweise bestätigt sind, erscheint beispielsweise das Eingabefeld 64.

Bei dem dargestellten Ausführungsbeispiel endet mit dieser Maske die Tätigkeit des Kunden, d.h., dass zum Aktivieren des Bearbeitungsvorgangs nunmehr der Betreiber bzw. Verkäufer benötigt wird, der den Aktivierungscode ins Eingabefeld 64 eingibt, um den Bearbeitungsvorgang am Bearbeitungsgerät 6 zu starten. Der Verkäufer legt dazu an der entsprechenden Stelle einen Stempelplatten-Rohling 80 in das Bearbeitungsgerät 6 und gibt den Code im Eingabefeld 64 ein. Der Kunde kann dann anschließend vor Ort den Bearbeitungsvorgang beobachten. Nachdem der Bearbeitungsvorgang beendet ist, entnimmt der Verkäufer die aus dem Stempelplatten-Rohling gefertigte negative Textplatte 2 und montiert diese am Stempel 3, sodass der Kunde nunmehr sofort den fertigen Stempel 3 mit nach Hause nehmen kann. Durch die derzeitige Halbautomatisierung und die Vorort-Bearbeitung steht dem Kunde nach wenigen Minuten seine fertige Textplatte 2 zur Verfügung und dieser muss nicht, wie aus dem Stand der Technik bekannt, ein paar Tage auf die zugesandte Textplatte 2 warten oder diese erst nach einiger Zeit vom Verkäufer wieder abholen.

Selbstverständlich ist es aber auch möglich, dass der zuvor beschriebene halbautomatisierte Bearbeitungsvorgang derart erweitert wird, dass dies sogar vom Kunden selbst durchgeführt werden kann, wozu durch entsprechende Vorkehrungen, Abfragen, und Anweisungen der Kunden Schritt für Schritt durchgeführt wird, wobei hierzu entsprechende Masken, Eingaben bzw. Abfragen angezeigt werden. Beispielsweise kann aufgrund des Layouts 52 und des gewählten Stempels 3 von einem Stempelplatten-Automaten (nicht dargestellt) dem Kunden der richtige Stempelplatten-Rohling 80 ausgegeben werden, den er in das Bearbeitungsgerät 6 unter Anzeige der Position und Ein- bzw. Ausgabehilfen einlegt. Erst nachdem der Bearbeitungsraum mit einer Tür/Klappe verschlossen wurde, wird nach Überprüfung der Lage des Stempelplatten-Rohlings 80 und der Klappe des Bearbeitungsgerätes 6 der Bearbeitungsvorgang gestartet. Grundsätzlich ist es möglich, diesen Einlegevorgang ebenfalls zu automatisieren, wozu beispielsweise entsprechende Roboterarme, odgl., verwendet werden können.

Darüber hinaus ist es möglich, dass auch für die Erstellung des Layouts sicherheitstechnische Überwachungssoftware im Hintergrund abläuft. Beispielsweise ist es möglich, dass beim Verändern des Layouts, insbesondere bei zu großen Texten, diese nicht mehr auf die Textplattengröße des ausgewählten Stempels 3 passt, sodass hierzu ein Warnhinweis am Bildschirm erscheint. Gleichzeitig kann dabei von der Software ein neuer Stempel 3 derselben Serie vorgeschlagen werden, wo das Layout passen würde, was der Kunde annehmen oder ablehnen kann. Es ist auch möglich, dass eine Überwachung der Textlänge pro Zeile erfolgt, sodass bei zu langem Text in einer Zeile die Software automatisch eine neue Zeile einfügt, wozu der Kunde wiederum zustimmen muss. D.h., dass die vorgeschlagene Stempelabdruckgröße 46 und/oder der Stempel 3 vom Nutzer angenommen werden kann oder eine andere Stempelabdruckgröße 46 und/oder Stempel 3 ausgewählt werden kann, wobei bei Änderung der vorgeschlagenen Stempelabdruckgröße 46 und/oder Stempel 3 von dem Eingabegerät 4 und/oder dem Steuergerät 5 der Stempelabdruck7, wenn nötig, angepasst wird. Insbesondere treten derartige Änderungen dann ein, wenn der Nutzer beim Erstellen des Layouts oftmals eine zu große Schrift wählt oder die Grafik, Bild oder Logo vom Nutzer zu groß ist, sodass es auf den gewählten Stempel 3 mit nur schlechter Qualität wiedergegeben werden kann.

Auch ist es möglich, dass der Ablauf des zuvor beschriebenen Verfahrens bzw. der angewandten Software im Eingabegerät 4 nicht auf den exakten Ablauf gebunden ist, sondern ist es möglich, dass beispielsweise zuerst die Stempelabdruckgröße 46 gewählt wird und anschließend erst der Stempeltyp oder der dazu passende Stempeltyp vorgeschlagen wird. Insbesondere ist es möglich, dass noch weitere Masken bzw. Abläufe für die Erstellung einer Stempelplatte 2 vor Ort verwendet werden können.

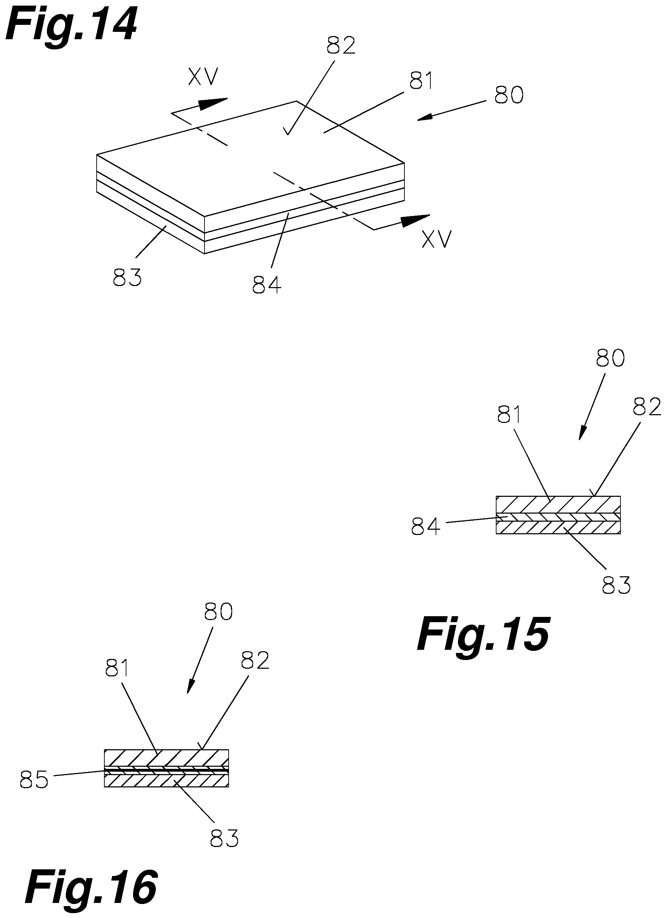

In den nachfolgenden Figuren 14 bis 24 sind verschiedenste Ausführungsbeispiele von Stempelplatten-Rohlingen 80 dargestellt.

Der Stempelplatten-Rohling 80 ist für das Bearbeitungsgerät 6, insbesondere den Laserplotter 9, zum Erzeugen der Stempelplatte 2 für den, insbesondere hand-betätigbarer Stempel 3, konzipiert. Das vom Bearbeitungsgerät 6 bearbeitbare Material besteht aus einem bevorzugt gummiartigen Grundmaterial 81, insbesondere einen bevorzugt silikonhaltigen Trägermaterial 81, welches üblicherweise sehr flexible ist und bevorzugt von einem Laser 13,14 bearbeitbar, insbesondere aushärtenbar, ist. Zum Erreichen einer ebenflächigen, insbesondere ebenen, Oberfläche 82 des Grundmaterials 81 ist für die weitere Bearbeitung das Grundmaterial 81 auf einer Grundplatte 83 abnehmbar positioniert. Dazu ist zum Befestigen des Grundmaterials 81 auf der Grundplatte 83 eine Klebeschicht 84 angeordnet, wobei die Klebeschicht 84 bevorzugt derart ausgebildet ist, dass eine gute dauerhafte Haftung an einem Druckplattenträger des Stempels 3 gegeben ist. Die Klebeschicht 84 besteht aus einem doppelseitigen Klebeband 85. Die Grundplatte 83 ist nach der Bearbeitung des daran angeordneten Grundmaterials 81 und nach dem Abnehmen des Grundmaterials 81 wieder verwendbar, d.h., dass wiederum auf der Grundplatte 83 ein Grundmaterial 81 aufgeklebt werden kann und somit ein neuer Rohling zur Verfügung steht.

Zum Herstellen einer Einlage, insbesondere des Stempelplatten-Rohlings 85 wird das Grundmaterial 81 entsprechend der Größe der Grundplatte 83 hergestellt, insbesondere zurrecht geschnitten, worauf auf das Grundmaterial 81 oder der Grundplatte 83 die spezielle Klebeschicht 84 bevorzugt in Form eines doppelseitiges Klebebandes 85, aufgebracht wird, und anschließend das Grundmaterial 81 auf die Grundplatte 83 mit der Klebeschicht 84 befestigt wird. Dadurch wird erreicht, dass die Oberfläche 82 des flexiblen Grundmaterials 81 flach und vor allem gerade bzw. eben ausgebildet ist, sodass eine optimale Weiterverarbeitung möglich ist. Damit werden auch die Handlingeigenschaften wesentlich verbessert, da der Rohling nicht mehr, wie aus dem Stand der Technik bekannt, sehr flexibel ist, sondern über die Grundplatte 83 sehr stabil ist.

Insbesondere bei dem Einsatz in einem derartigen System 1 ist es wichtig, dass bei nicht vorhandenem Fachpersonal, die Arbeitsschritte so einfach wie möglich gestaltet werden. Dazu gehört als Hauptkomponente des Systems 1 der Stempelplatten-Rohling 85. Um eine Textplatte 2 erstellen zu können, ist es erforderlich, dass das Grundmaterial 81 derart ausgebildet ist, dass dieses mit dem Bearbeitungsgerät 6 bearbeitbar ist, d.h., dass bei Verwendung des Laserplotters 9 als Bearbeitungsgerät 6 das Grundmaterial 81 von dem Laser 13 oder 14 bearbeitbar, insbesondere aushärtenbar bzw. abtragbar ist. Dazu besteht das Grundmaterial bevorzugt aus einem silikonhaltigen Kunststoff, insbesondere Gummi.. Die Grundplatte ist aus einem festen Material gebildet, wobei hierzu Materialien eingesetzt werden können, die bevorzugt eine hohe Steifigkeit und eine gute Gleitfähigkeit aufweisen.

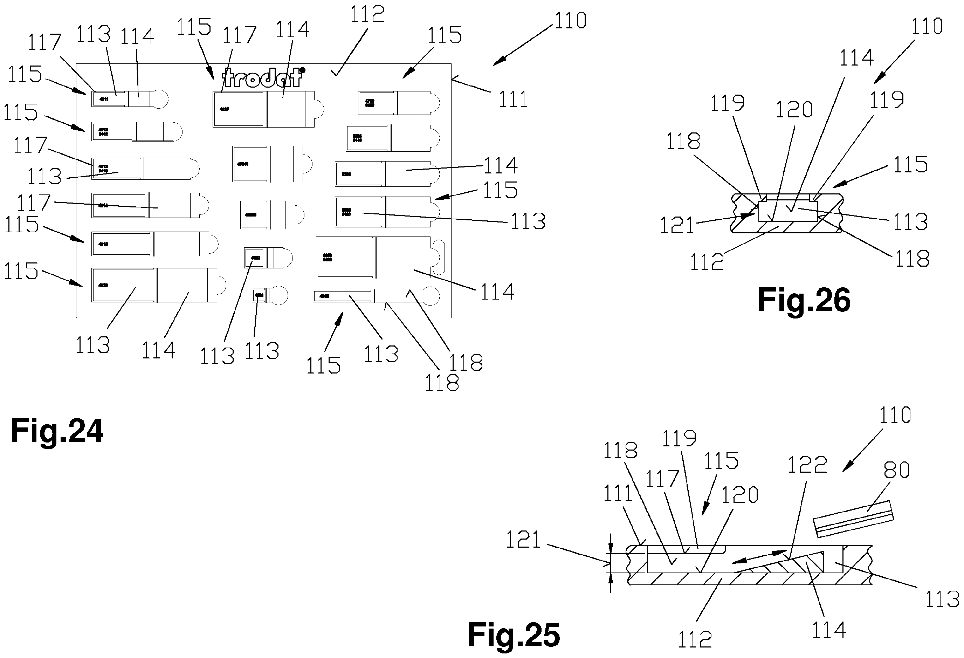

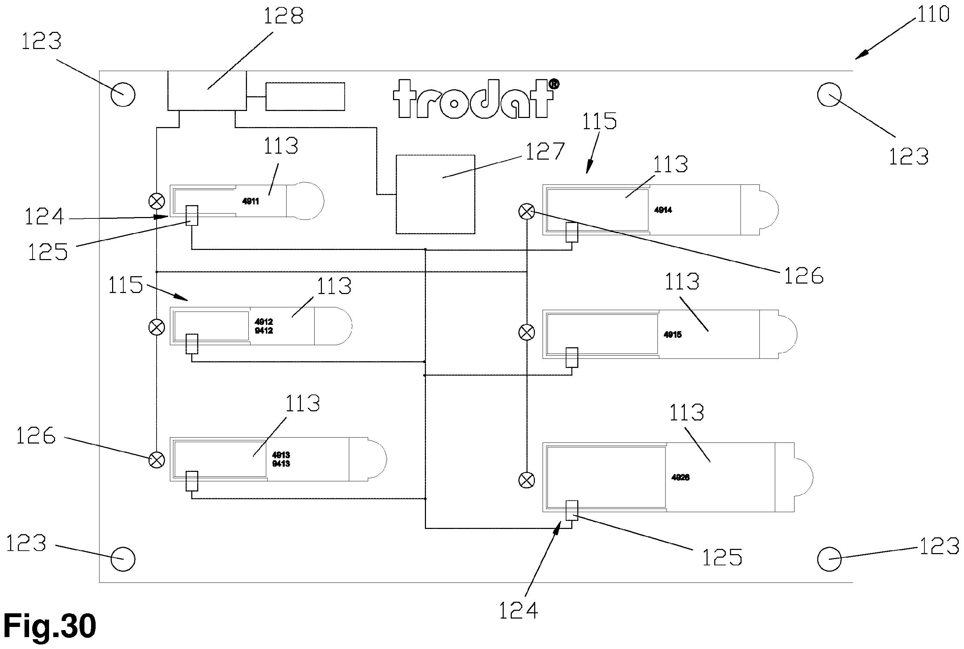

Die spezielle Ausbildung, insbesondere der Aufbau des Stempelplatten-Rohlings 80 dient dazu, dass damit eine einfach und sichere Positionierung im Bearbeitungsgerät 6 statt finden kann. Dazu weist das Bearbeitungsgerät 6, insbesondere der Laserplotter 9 zum Gravieren, Markieren, Beschriften und/oder Bearbeiten einer Einlage, insbesondere der Stempelplatten-Rohlinge 80 und/oder Werkstücke, einen Bearbeitungstisch 15 auf, in dem eine Bearbeitungseinlage 110, insbesondere Tray 111 oder Jig, angeordnet ist, wobei auf die spezielle Ausgestaltung der Bearbeitungseinlage 110 später in den Figuren 25 bis 30 noch näher eingegangen wird. Die Bearbeitungseinlage 110 umfasst dabei einen Grundkörper 112 mit zumindest einer oder mehrere Ausnehmungen 113 zum Positionieren einer Einlage, insbesondere des Stempelplatten-Rohlings 80. Dabei ist zumindest einer Ausnehmung 113 eine Entnahmehilfe 114 zugeordnet, wobei bevorzugt diese Ausnehmung 113 Mittel 115 zum Führen und Positionieren der Einlage, insbesondere der Stempelplatten-Rohling 80 und/oder des Werkstückes, aufweist, d.h., dass der Stempelplatten-Rohling 80 vom Nutzer oder Verkäufer in die Ausnehmungen 113 eingelegt wird, wobei dieser über die Mittel 115 positioniert und geführt ist. Wie aus dem dargestellten Ausführungsbeispiel ersichtlich, ist das Grundmaterial 81 auf der gesamten Fläche der Grundplatte 83 angeordnet, d.h., dass sich das Grundmaterial 81 bis an den Rand der Grundplatte 83 erstreckt, sodass beim Einlegen des Stempelplatten-Rohlings 80 in die Bearbeitungseinlage 110 gleichzeitig die Grundplatte 83 und das Grundmaterial 81 über die Mittel 115 geführt sind.

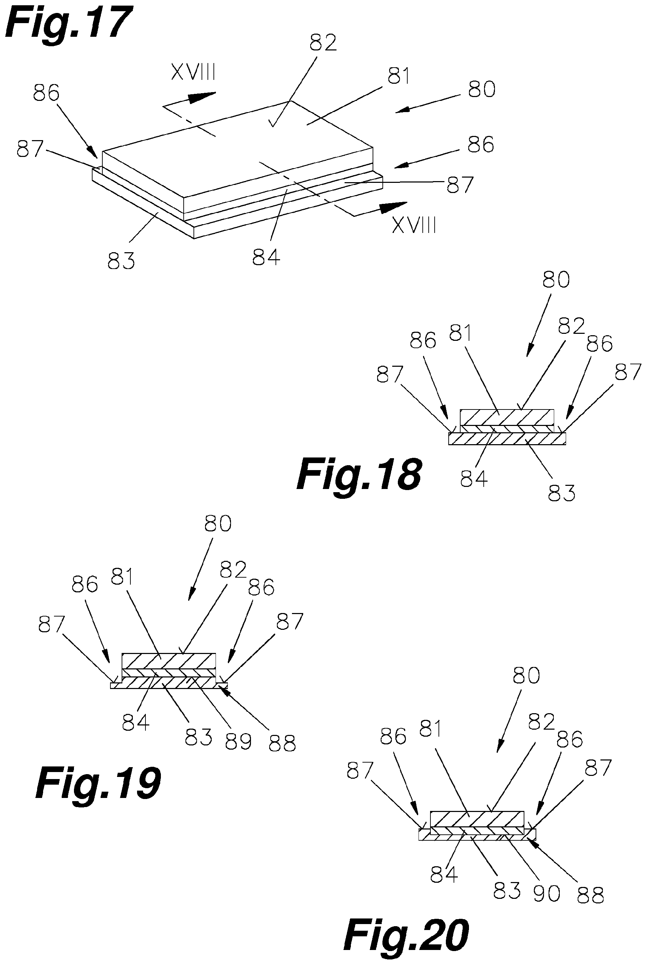

Bei einem weiteren Ausführungsbeispiel des Stempelplatten-Rohlings 80, gemäß Fig. 17 bis 23, ist zur Bildung eines seitlichen Randes, insbesondere Mittel 86 in Form von seitlichen Führungsbahnen 87, das Grundmaterial 81 kleiner als die Grundplatte 83 ausgebildet, d.h., dass die Grundplatte 83 Mittel 86 zum Führen in einer korrespondierenden Ausnehmung 113 der Bearbeitungseinlage 110 aufweist. Der Stempelplatten-Rohling 80 ist somit zum Einlegen in der Bearbeitungseinlage110, insbesondere Tray 111 oder Jig, zum weiteren Bearbeiten ausgebildet, wobei hierzu die Führung nunmehr ausschließlich über die Grundplatte 83 erfolgt.

Ein weiteres Ausführungsbeispiel, gemäß Fig. 19 bis 20, zeigt, dass die Grundplatte 83 auf zumindest einer Seite Positioniermittel 88 zum Anbringen des Grundmaterials 81 und/oder zum Positionieren in einer Bearbeitungseinlage 110, insbesondere einem Tray 111 oder Jig, aufweist. Dabei ist in Fig. 19 gezeigt, dass das Positioniermittel 88 zum Anbringen des Grundmaterials 81 durch eine Erhöhung 89 gebildet ist, wogegen in Fig. 20 das Positioniermittel 88 als Vertiefung 90 gebildet ist.

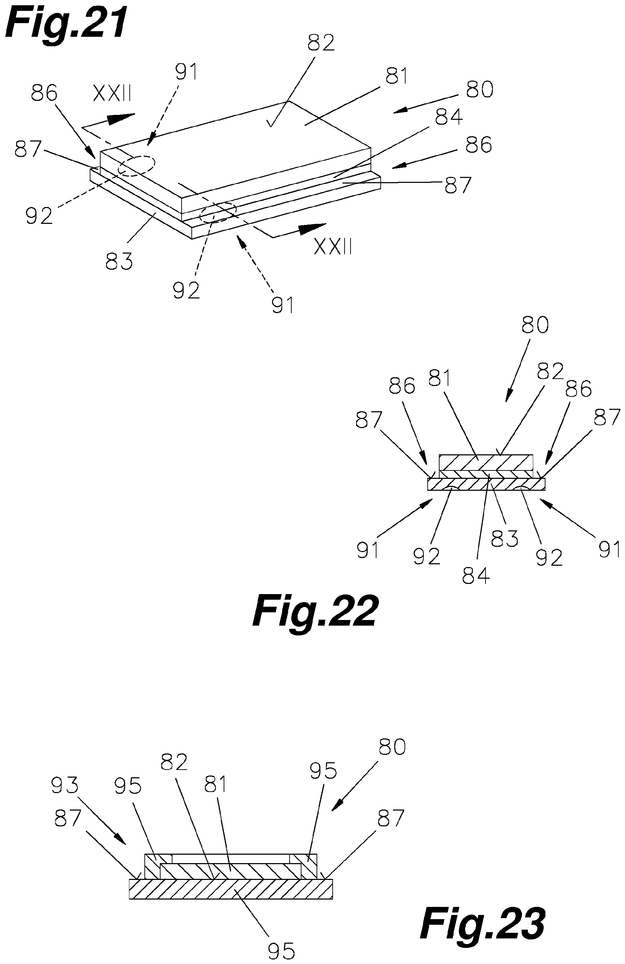

Weiters ist es möglich, dass an der der Bearbeitungseinlage 110 zugewandten Seite oder seitlich zum Grundmaterial 81 bzw. der Grundplatte 83 weitere Positioniermittel 91 angeordnet sind, die zur Führung und Positionierung in der Bearbeitungseinlage 110 dienen, d.h., dass das Positioniermittel 91 zum Positionieren in der Bearbeitungseinlage 110, insbesondere in einem Tray 111 oder Jig, durch Nuten, Vorsprünge, Führungsbahnen, usw. gebildet sind, die an der gegenüberliegenden Seite und/oder seitlich zu dem an der Grundplatte 83 befestigten Grundmaterial 81 angeordnet sind. Dabei kann in Zusammenwirken mit der Bearbeitungseinlage 110 eine Art Schnappverbindung realisiert werden, sodass der Nutzer oder Verkäufer beim Einlegen eine mechanische Rückmeldung erhält und somit weiß, dass der Stempelplatten-Rohling 80 richtig positioniert ist. Beispielsweise können hierzu in der Ausnehmung 113 der Bearbeitungseinlage 110 halbrunde Erhöhungen 116 angeordnet sein und an der Grundplatte 83 korrespondierende halbrunde Einbuchtungen 92, wie in Fig. 21 und 22 gezeigt, vorhanden sein, sodass beim Einlegen der Stempelplatten-Rohling 80 über die Erhöhung 116 geschoben wird und anschließend die Erhöhung 116 in der Einbuchtung 92 einschnappt. Somit wird beispielsweise ein sicherer und exakter Halt des Stempelplatten-Rohlings 80 in der Bearbeitungseinlage 110 erreicht. Grundsätzlich ist hierzu zu erwähnen, dass alle Ausführungen des Stempelplatten-Rohlings 80 derart gebildet sind, dass das Grundmaterial 81 vollständig den Grundkörper 83 bedeckt oder kleiner ausgebildet ist.

In einem nicht erfindungsgemäßen Ausführungsbeispiel, gemäß Fig. 23, ist gezeigt, dass die Grundplatte 83 zur Aufnahme des Grundmaterials 81 als Halteelement 93, insbesondere Halterahmen, zum Einlegen des Grundmaterials 81, ausgebildet ist. Dabei ist das Halteelement 92 aus zwei Teile, nämlich einer Bodenplatte 94 und einem dazu passenden Rahmen 95 gebildet. Um das Grundmaterial 81 zu positionieren, wird der Rahmen 95 abgenommen und das Grundmaterial 81 auf der Bodenplatte 94 positioniert, wozu entsprechende Hilfsmittel (nicht dargestellt) angeordnet sind oder das Grundmaterial 81 in den Rahmen 95 eingelegt wird. Anschießend wird der Rahmen 95 aufgesetzt und mit der Bodenplatte 94 verbunden, wobei hierzu entsprechende Schnappverbindungen und/oder Scharniere (nicht dargestellt) angeordnet sind. Damit wird erreicht, dass das Grundmaterial 81 zwischen den beiden Teilen eingeklemmt wird und somit ein sicherer und fester Halt geschaffen wird, sodass das Halteelement 93 anschließend in die Ausnehmung 113 einer Bearbeitungseinlage 110 eingelegt werden kann. Durch diese Ausbildung kann die Klebeschicht 84 eingespart werden, wobei erfindungsgemäß zusätzlich eine Klebeschicht 84 auf der Bodenplatte 94 verwendet wird.

Bevorzugt ist die Grundplatte 83 bzw. das Halteelement 93 derart ausgebildet, dass die Grundplatte 83 bzw. das Halteelement 93 nach der Bearbeitung des daran angeordneten Grundmaterials 81 und nach dem Abnehmen des Grundmaterials 81 wieder verwendbar ist, d.h., dass wiederum ein neues Grundmaterial 81 auf den bereits verwendeten Grundkörper 83 oder in das Halteelement 93 aufgeklebt bzw. eingelegt wird.

Um jedoch eine optimale und sichere Positionierung sowie ein einfaches Einlegen und Entnehmen des Stempelplatten-Rohlings 80 in der Bearbeitungseinlage 110 zu gewährleisten, ist es notwendig, dass die Bearbeitungseinlage 110 entsprechend korrespondierend zu dem Stempelplatten-Rohling 80 ausgebildet ist und zusätzliche Vorkehrungen und Hilfsmittel aufweist.

Bei der Verwendung eines doppelseitigen Klebebandes 85 ist es möglich, dass dieses beim Abnehmen des Grundmaterials 81 am Grundmaterial 81 haftend bleibt, sodass das Grundmaterial 81 anschließend mit dem Klebeband 85 auf einen Druckplattenträger des Stempels 2 geklebt werden kann. Somit kann die Herstellung des Stempels 3 ohne Klebeband am Druckplattenträger erfolgen.

Wie nunmehr in den Fig. 24 bis 30 zu entnehmen ist, ist die bereits zuvor beschriebene Bearbeitungseinlage 110 dargestellt, wobei die Bearbeitungseinlage 110, insbesondere Tray 111 oder Jig, für einen Laserplotter 9 zum Gravieren, Markieren, Beschriften und/oder Bearbeiten einer Einlage gebildet ist und einen Grundkörper 112, der beispielsweise transparent ausgebildet ist, mit zumindest einer oder mehrere Ausnehmungen 113 zum Positionieren der Einlage, insbesondere dem Stempelplatten-Rohling 80, umfasst, und zumindest einer Ausnehmung 113 eine Entnahmehilfe 114 zugeordnet ist, wobei bevorzugt diese Ausnehmung 113 Mittel 115 zum Führen und Positionieren der Einlage, insbesondere der Stempelplatten-Rohling 80 und/oder des Werkstückes, aufweist.

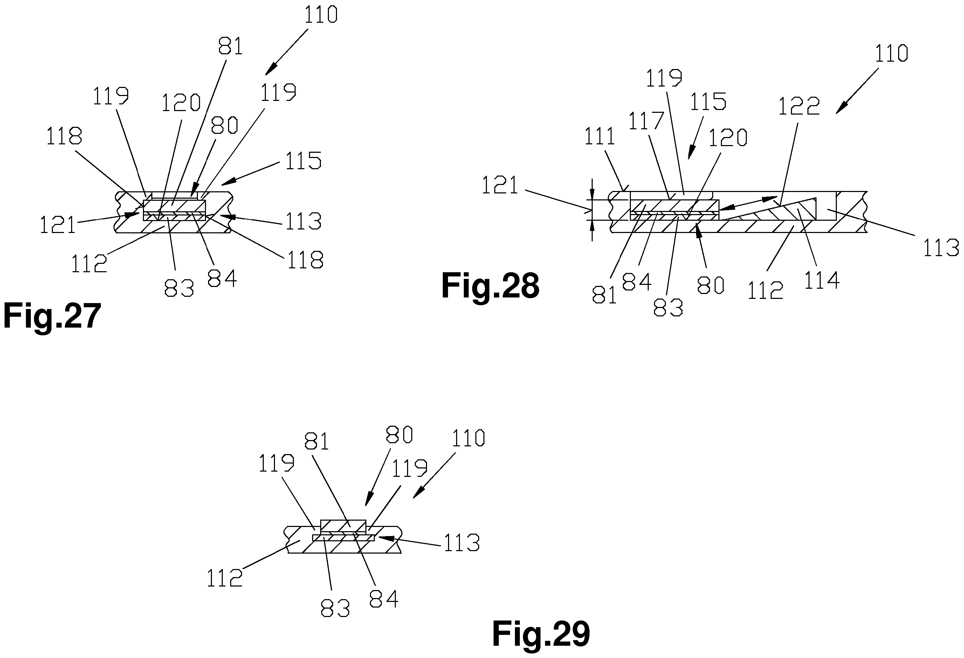

Die Mittel 115 in den Ausnehmungen 113 sind bevorzugt in Form einer Führungsbahn 117 ausgebildet, wobei die Mittel 115 in den Ausnehmungen 113 im Randbereich, insbesondere an Längseiten 118, über zumindest einen Teilbereich des Randbereiches angeordnet sind, d.h., dass die Führungen nicht über die gesamte Länge der Längsseiten 118 verlaufen, sondern nur einen Teil ausbilden können. Dabei ist es auch möglich, dass mehrere unterbrochene Führungen an einer Längsseite 118 angeordnet sein können. Die Führungsbahn 117 wird derart gebildet, dass ein Vorsprung 119 angeordnet ist, sodass zwischen einer Auflageebene 120 und dem Vorsprung 119 ein Freiraum 121 gebildet ist, wie dies aus Fig. 25 zu entnehmen ist. Durch den Freiraum 121 ist es möglich, dass zwischen der Auflageebene 120 und der Unterkante, die der Auflageebene 120 zugewandt ist, der Stempelplatten-Rohling 80 eingeschoben ist, wie dies in den Fig. 26 und 28 ersichtlich ist. Dabei zeig Fig. 26 und 27 eine Anwendung bei der der Stempelplatten-Rohling 80 mit dem bis zum Rand verlaufenden Grundmaterial 81 eingeschoben wird, wogegen in Fig. 28 lediglich der Grundkörper 83 in die Führungsbahn 117, insbesondere in den Freiraum 121 ragt. Wesentlich ist somit, dass je nach einsetzbarem Stempelplatten-Rohling 80 die Führungsbahnen 117 angeordnet sind, sodass es möglich ist, dass für die unterschiedlichen Stempelplatten-Rohlinge 80 unterschiedliche Bearbeitungseinlagen 110 vorhanden sind, und diese je nach Bedarf in das Bearbeitungsgerät 6 eingelegt werden. Selbstverständlich ist es auch möglich, dass mehrere gleiche Ausnehmungen 113 mit unterschiedlich hohem Freiraum 121 vorhanden sind, sodass der Rohling 80 entsprechend eingelegt wird.

Damit jedoch dem Kunden oder Verkäufer das Einlegen und Entnehmen des Stempelplatten-Rohlings 80 erleichtert wird, ist es möglich, dass zumindest einer, insbesondere jedoch allen Ausnehmungen 113 jeweils eine Entnahmehilfe 114 zugeordnet und angeordnet ist, die dabei fix oder entnehmbar in der Ausnehmung 113 angeordnet ist. Dabei ist die Entnahmehilfe 114 durch eine bevorzugt schräg verlaufende Rampe 122 gebildet, wie dies in Fig. 26 ersichtlich ist. Selbstverständlich ist es möglich, dass anstelle einer Rampe 122 auch andere Entnahmehilfen 114 eingesetzt werden können. Beispielsweise kann die Entnahmehilfe 114 durch einen Hebestößel oder eine schwenkbare Bodenplatte, usw. (nicht dargestellt) gebildet sein. Es ist auch möglich, dass anstelle einer Rampe 122 ein besonderer Verlauf, insbesondere ein elyptischer Verlauf, verwendet wird, sodass beim Herausschieben der Rohling 80 einfach aus der Ausnehmung 113 herausgehoben wird und der Verkäufer bzw. Kunden diesen leicht entnehmen kann.

Bevorzugt sind am Grundkörper 112 eine Vielzahl von unterschiedlich großen Ausnehmungen 113 bevorzugt der korrespondierenden möglichen Stempelgrößen 46 eines Stempels 3, angeordnet, sodass nur eine Einlage benötigt wird, um eine möglichst große Anzahl von unterschiedlichen Stempelplatten-Rohlingen 80 verwenden zu können und somit die Bearbeitungseinlage 110 nicht ständig getauscht werden muss. Dabei ist es auch möglich, dass der Grundkörper 112 transparent ausgebildet ist. Es ist auch möglich, dass der Grundkörper 112 aus mehreren Elementen, insbesondere Platten, aufgebaut ist. Von Vorteil ist, wenn am Grundkörper 112 Mittel 123, insbesondere Führungsbohrungen, zum Positionieren am Bearbeitungstisch 15, insbesondere an Führungszapfen, angeordnet sind, sodass beim Tausch einer Bearbeitungseinlage 110 immer eine definierte Position für die Bearbeitungseinlage 110 am Bearbeitungstisch 15 gegeben ist oder die Führungszapfen an der Bearbeitungseinlage 110 angeordnet sind und der Bearbeitungstisch 15 korrespondierende Bohrungen aufweist. Es hat sich auch herausgestellt, dass die Beschriftung mit dem Stempeltyp von Vorteil ist, da der Kunde bzw. Verkäufer auch eine optische Kontrolle vornehmen kann, ob er den Rohling 80 zur Bearbeitung richtig einlegt.

Damit der Stempelplatten-Rohling 80 auch in der richtigen Ausnehmung 113 der Bearbeitungseinlage 110 eingelegt wird, ist es möglich, dass die Bearbeitungseinlage 110 mit Überwachungsmitteln 124 ausgestattet ist, um eine automatische Überprüfung durchführen zu können. Dabei ist bei zumindest einer Ausnehmung 113 mit der Entnahmehilfe 114 oder dem Mittel 115 ein Mittel 124 zum Erkennen der Einlage angeordnet, d.h., dass den Ausnehmungen 113 ein Sensor 125 zum Erkennen, ob ein Stempelplatten-Rohling 80 eingelegt ist oder nicht, zugeordnet ist. Der Sensor 125 kann beispielsweise durch einen mechanischen Schaltsensor gebildet sein, sodass bei eingeschobenem Stempelplatten-Rohling 80 der Sensor 80 aktiviert ist und somit dies vom Eingabegerät 4 u/o Steuergerät 5 u/o Bearbeitungsgerät 6 erkannt bzw. abgefragt werden kann. Hierbei ist es möglich, dass auch eine Lichtschranke, ein Infrarotsensor oder beispielsweise eine RFID-System, bei dem ein Element am Grundkörper 83 des Stempelkissen-Rohlings 80 positioniert ist, usw. verwendet wird.

Weiters ist es auch möglich, dass eine optische Anzeige für die richtige Ausnehmung 113 verwendet werden kann. Hierzu ist es möglich, dass zumindest einer Ausnehmung 113 mit der Entnahmehilfe 114 ein Mittel 126 zum Beleuchten der Ausnehmung 113 zugeordnet ist. Dabei kann das Mittel 126 direkt im Grundkörper 112 integriert sein oder es kann unterhalb am Bearbeitungstisch 15 oder oberhalb angeordnet sein, wobei bei Aktivierung die entsprechende Ausnehmung 113 beleuchtet wird. Somit wird erreicht, dass dem Nutzer bzw. Verkäufer vor dem Einlegen bereits angezeigt wird, in welche Ausnehmen 113 er den Stempelplatten-Rohling 80 einlegen soll. Es ist auch möglich, dass beispielsweise jeder Ausnehmung 113 eine Led als Mittel 126, wie dargestellt, zugeordnet wird, die entsprechend aktiviert werden kann, um den Nutzer oder Verkäufer darauf hinzuweisen, wo er den Stempelplatten-Rohling 80 einlegen muss.

Zur vollständigen Automatisierung und Überprüfung ist es weiters möglich, dass im Grundköper 112 ein Mittel 127 zur Identifizierung und/oder Speicherung von Daten angeordnet ist. Auch ist es möglich, dass am Grundkörper 112 eine Schnittstelle 128 zum automatischen Verbinden mit den Bearbeitungstisch 15 zur Versorgung mit elektrischer Energie und zur Datenübertragung angeordnet ist, d.h., dass beim Einlegen der Bearbeitungseinlage 110 über die Schnittstelle 128 eine elektrische u/o optische Verbindung mit einer weiteren am Bearbeitungstisch 15 oder im Bearbeitungsraum des Bearbeitungsgerätes 6 angeordneten Schnittstelle (nicht ersichtlich) hergestellt wird bzw. verbindbar ist, wodurch Energie und Daten übertragen werden können. Hierzu ist es möglich, dass bei einem modularen Aufbau, insbesondere mehreren übereinander angeordneten Elementen, ein Element der Bearbeitungseinlage 110 Hohlräume, Führungskanäle zur Aufnahme von elektrischen Komponenten, wie Sensoren, Leitungen, usw. aufweist, sodass dadurch ein einfacher und kostengünstiger Aufbau erzielt wird, wie dies schematisch dargestellt ist. Auch wird dadurch die Sicherheit wesentlich erhöht. Grundsätzlich kann gesagt werden, dass es selbstverständlich möglich ist, dass für die Datenkommunikation und/oder Positionserkennung entsprechende Vorkehrungen und Elemente an der Bearbeitungseinlage 110, insbesondere den Ausnehmungen 112, und/oder dem Stempelplatten-Rohling 80 geschaffen werden bzw. angeordnet sind, die aus dem Stand der Technik bekannt sind. Dabei ist es auch möglich, dass eine drahtlose Energieübertragung und Datenübertragung durchgeführt werden kann, wozu der Bearbeitungsraum, insbesondere der Bearbeitungstisch 15, entsprechend ausgestattet ist.

Damit wird auch erreicht, dass bei einem Tausch der Bearbeitungseinlage 110 von einem oder mehreren Komponenten des System ein automatische Erkennung der neu eingelegten Bearbeitungseinlage 110 möglich ist, und dass ev. notwendige Daten vom Speicher der Bearbeitungseinlage 110 an die Komponenten übertragbar sind, d.h., dass entsprechende Daten, Informationen, usw. an der Bearbeitungseinlage 110 gespeichert sind, die abrufbar bzw. übertragbar sind. Damit wird erreicht, dass für neue Stempel 3 eine neue Bearbeitungseinlage 110 erzeugt wird und die entsprechend notwendigen Daten hinterlegt werden, sodass bei bereits bestehenden Anlagen nur noch die neue Bearbeitungseinlage 110 eingelegt werden muss, um das System mit den neuesten Daten und Informationen zu versorgen. Somit ist keinerlei Wartung über Fachpersonal notwendig, die die neuen Daten, Informationen in die alten Anlagen einspielen müssen, da diese Daten, Updates, usw. über die neue Bearbeitungseinlage 110 erfolgt.

Damit derartige Vorkehrungen einsetzbar sind, ist es notwendig, dass die dazugehörigen Bearbeitungsgeräte 6 entsprechend ausgebildet sind, d.h., dass der eingesetzte Laserplotter 9 zum Gravieren, Markieren, Beschriften und/oder Bearbeiten einer Einlage, insbesondere eines Stempelplatten-Rohlings 80 und/oder Werkstücks, zumindest einen Bearbeitungstisch 15 zum Positionieren der Einlage 110, zumindest eine Strahlenquelle 11 oder 12 in Form eines Lasers 13 oder 14 mit entsprechenden Umlenkelementen 17 und einer bevorzugt verfahrbaren Fokussiereinheit 18 und eine Steuereinheit oder ein Steuergerät 5 zum Steuern der einzelnen Elemente umfasst, wobei die Steuereinheit bzw. das Steuergerät 5 zumindest zum Empfang von an einer externen Komponente, insbesondere dem Eingabegerät 4, erzeugten Daten, insbesondere einer Grafik und/oder Text für einen Stempelabdruck 2, ausgebildet ist, und dass der Bearbeitungstisch 15 zur Aufnahme und Positionierung der Bearbeitungseinlage 110, insbesondere eines Tray 111 oder Jigs, gemäß der zuvor beschriebenen Ausführungsbeispiele, ausgebildet ist, wobei hierzu lediglich eine schaubildliche Darstellung des Bearbeitungsgerätes 6 gemäß Fig. 1 gezeigt ist.

Hierbei ist das Bearbeitungsgerät 6, insbesondere der Laserplotter 9, derart ausgebildet, dass unterschiedliche Bearbeitungseinlagen 110 einlegbar sind, wobei bevorzugt eine automatische Positionsbestimmung erfolgt, d.h., dass nach dem Tausch einer Bearbeitungseinlage 110 eine neue automatische Positionsbestimmung des Ausgangspunktes, insbesondere des Referenzpunktes und der Höhe des Bearbeitungstisches 15 durchgeführt wird. Dabei ist es möglich, dass in einer Speichereinheit, insbesondere in Form von einer oder mehreren Tabellen, unterschiedliche Bearbeitungseinlagen, insbesondere Tray oder Jigs, hinterlegt sind, und dass zu den Bearbeitungseinlagen zumindest die unterschiedlichen Startpositionen, insbesondere Referenzpunkte, für den Laser gespeichert sind. Der Nutzer kann dabei aus den hinterlegten Bearbeitungseinlagen 110 die entsprechend eingelegte Bearbeitungseinlage 110 auswählen oder es ist auch möglich, dass eine automatische Erkennung aktiviert ist, sodass der Nutzer nach einem Tausch nichts weiters mehr einstellen muss. Zu den hinterlegten Bearbeitungseinlagen 110 sind bevorzugt weitere Daten, wie beispielsweise die Tiefe der Ausnehmung 113, die Positionshöhe des Bearbeitungstisches 15, der Bearbeitungsbereich für die entsprechende Ausnehmung 113, die Stempelgröße 46 und/oder die Bezeichnung der dazupassenden Stempel 3, usw., gespeichert.

Ein derartiger Laserplotter 9 weist weiters eine Absaugung auf, wobei die Absaugung zum Reinigen des erzeugten Stempelabdrucks 7 angeordnet ist und über einen Schlauch vom Nutzer bewegbar ist, d.h., dass während des Bearbeitungsvorganges im Bearbeitungsraum die Absaugung aktiviert ist und die Luft im Bearbeitungsraum absaugt, und dass nach dem Bearbeitungsvorgang die Schlauchabsaugung aktiviert wird, sodass der Nutzer den Rohling 80 entnehmen kann und über den Schlauch, an dem beispielsweise eine spezielle Bürste mit Absaugöffnungen am Ende angeordnet ist, die gefertigte Stempelplatte 2 reinigen kann. Selbstverständlich ist es möglich, dass auch während der Bearbeitung die Schlauchabsaugung aktiviert sein kann oder dass der Nutzer manuell die Schlauchabsaugung einschalten kann.

Bevorzugt wird die Blasluft automatisch, insbesondere parametergesteuert, in zwei Stufen an das bearbeitete Material angepasst. Dies geschieht durch eine bei Stempelgravur zugeschaltete zusätzliche größere Pumpe. Die Blasluftdüse ist in zwei Achsen einstellbar, sodaß der Fokus relativ genau getroffen werden kann. Die Reinigungsbürste wird nach der Gravur automatisch eingeschaltet. Dies geschieht mit einer automatisch arbeitenden Umschaltklappe für die Absaugung. Manuell kann die Reinigungsfunktion auch mit dem "Clean Button" 27 eingeschaltet werden.

Grundsätzlich ist es auch möglich, dass ein spezielles Reinigungsgerät für die Stempelplatte 2 eingelegt werden kann, worauf eine automatische Reinigung erfolgt. Dabei kann das Reinigungsgerät eine Flüssigreinigung und/oder Saugreinigung vornehmen.

Wesentlich bei dem dargestellten und beschriebene Vorort-System 1 ist, dass die HandlingEigenschaften derart vereinfacht werden, dass kein Fachpersonal erforderlich ist, sondern dies von einem Verkäufer oder einem Kunden selbst vor Ort durchgeführt werden kann, wozu sämtliche erforderlichen Maßnahmen für die Sicherheit getroffen werden müssen.

Auch ist es möglich, dass weitere äquivalente Ausführungen, die nicht dargestellt sind, in den Schutzbereich der Erfindung fallen. Dazu ist es beispielsweise möglich, dass die Führungsbahn 117 durch eine Nut im Grundkörper 112 und in der Entnahmehilfe 114 angeordnet ist, wobei korrespondierend am Stempelplatten-Rohling 80 ein Vorsprung auf der Unterseite, also der gegenüberliegenden Seite zum Grundmaterial 81, angeordnet ist, sodass dieser Vorsprung in die Nut einsetzbar ist und beim Einschieben bzw. Positionieren der Stempelplatten-Rohling 80 und beim Entnehmen der Rohling 80 über die Nut geführt ist. Weiters ist es auch möglich, dass an einem einlegbaren Werkzeug, beispielsweise einem Kugelschreiber, oder dem Stempelplatten-Rohling 80, fixe oder abnehmbare korrespondierende Mittel zum Einlegen in die Ausnehmungen 113 angeordnet sind, insbesondere kann das Mittel aufsteckbar ausgebildet sein, das beispielsweise auf den Kugelschreiber geklippst wird, sodass dieser dann über dieses Mittel in eine Ausnehmung eingeschoben werden kann. Dazu ist es möglich, dass der Nutzer in der Software eine entsprechende Aktivität durch Auswahl eines Buttons durchführt und die einzelnen Komponenten dann automatisch entsprechen eingestellt werden.

Auch ist es möglich, dass beispielsweise als Entnahmehilfe 114 eine Art Stößel in der Ausnehmung 113 angeordnet ist, der die Einlage, insbesondere den Stempelplatten-Rohling 80 oder ein Werkstück, aus der Ausnehmung 113 heraus hebt oder dass der Boden, insbesondere die Auflagefläche, beweglich ausgebildet ist, sodass durch Anheben dieser die in der Ausnehmung 113 positionierte Komponente angehoben, insbesondere herausgehoben wird.

Der Ordnung halber sei abschließend darauf hingewiesen, dass zum besseren Verständnis des Aufbaus des Systems 1 und deren Komponenten bzw. dessen Bestandteile teilweise unmaßstäblich und/oder vergrößert und/oder verkleinert dargestellt wurden.

## Patentansprüche

1. Stempelplatten-Rohling (80) für ein Bearbeitungsgerät (6), insbesondere einen Laserplotter (9) zum Erzeugen einer Stempelplatte (2) für einen, insbesondere hand-betätigbaren, Stempel (3), der aus einem flexiblen Grundmaterial (81) besteht, wobei zum Erreichen einer ebenflächigen Oberfläche (82) des flexiblen Grundmaterials (81) für die weitere Bearbeitung das Grundmaterial (81) auf einer Grundplatte (83) abnehmbar positioniert und die Grundplatte (83) aus einem festen Material mit hoher Steifigkeit gebildet ist, dadurch gekannzeichnet, dass zum Befestigen des flexiblen Grundmaterials (81) auf der Grundplatte (83) ein doppelseitiges Klebeband (85) angeordnet ist.

2. Stempelplatten-Rohling (80) nach Anspruch 1, **dadurch gekennzeichnet, dass** das flexible Grundmaterial (81) bevorzugt aus einem silikonhaltigen Kunststoff, insbesondere Gummi, besteht.

3. Stempelplatten-Rohling (80) nach Anspruch 1 oder 2, **dadurch gekennzeichnet, dass** die Grundplatte (83) Mittel (86) zum Führen in einer korrespondierenden Ausnehmung (113) einer Bearbeitungseinlage (110) aufweist.

4. Stempelplatten-Rohling (80) nach einem der vorhergehenden Ansprüche 1 bis 3, **dadurch gekennzeichnet, dass** zur Bildung eines seitlichen Randes, insbesondere seitlicher Führungsbahnen (87), das flexible Grundmaterial (81) kleiner als die Grundplatte (83) ausgebildet ist.

5. Stempelplatten-Rohling (80) nach einem der vorhergehenden Ansprüche 1 bis 4, **dadurch gekennzeichnet, dass** die Grundplatte (83) zur Aufnahme des flexiblen Grundmaterials (81) als Halteelement (93), insbesondere einer Bodenplatte (94) und eines Rahmens (95) zum Einlegen des flexiblen Grundmaterials (81), ausgebildet ist.

6. Stempelplatten-Rohling (80) nach einem der vorhergehenden Ansprüche 1 bis 5, **dadurch gekennzeichnet, dass** der Stempelplatten-Rohling (80) zum Einlegen in eine Bearbeitungseinlage (110), insbesondere Tray (111) oder Jig, zum weiteren Bearbeiten ausgebildet ist.

7. Stempelplatten-Rohling (80) nach einem der vorhergehenden Ansprüche 1 bis 6, **dadurch gekennzeichnet, dass** die Grundplatte (83) auf zumindest einer Seite Positioniermittel (88, 91) zum Anbringen des flexiblen Grundmaterials (81) und/oder zum Positionieren in einer Bearbeitungseinlage (110), insbesondere einem Tray (111) oder Jig, aufweist.

8. Stempelplatten-Rohling (80) nach einem der vorhergehenden Ansprüche 1 bis 7, **dadurch gekennzeichnet, dass** für unterschiedliche Stempelabdruckformen, insbesondere runde, ovale, dreieckige, die Grundplatte (83) rechteckförmig oder quadratisch ausgebildet ist oder dass bei angepassten Stempelabdruckformen Führungen zur Aufnahme in der Bearbeitungseinlage (110) angeordnet sind.

9. Verfahren zum Erstellen einer Textplatte (2) für einen Stempel (3), insbesondere einen Handstempel, bei dem an einem Eingabegerät (4) vom Nutzer ein Stempelabdruck (7) erstellt wird, worauf der Stempelabdruck (7) an ein Steuergerät (5) übergeben wird und von diesem der Stempelabdruck (7) derart umgewandelt wird, dass eine Ansteuerung eines Bearbeitungsgeräts (6) zum Erstellen eines negativen Stempelabdrucks (7) auf einem Stempelplatten-Rohling (80), erfolgt, **dadurch gekennzeichnet, dass** der Nutzer zuerst eine Stempelabdruckgröße (46) oder einen Stempel (3) auswählt und anschließend über Eingabemittel einen Text und/oder Grafik zur Bildung des Stempelabdruckes (7) eingibt oder der Nutzer zuerst über das Eingabegerät (4) mit entsprechenden Eingabemitteln den Stempelabdruck (7) erzeugt bzw. erstellt, worauf vom Eingabegerät (4) und/oder Steuergerät (5), insbesondere der darin laufenden Software, die Stempelabdruckgröße (46) und/oder der Stempel (3) ermittelt und vorgeschlagen wird, und der Stempelplattenrohling nach einem der Ansprüche 1-8 ausgebildet ist

10. Verfahren nach Anspruch 9, **dadurch gekennzeichnet, dass** vor der Erstellung des Stempelabdruckes (7) oder nach der Erstellung des Stempelabdruckes (7) die Kosten für die Erstellung und/oder den dazu passenden Stempel (3) dem Nutzer angezeigt werden.

11. Verfahren nach Anspruch 9 oder 10, **dadurch gekennzeichnet, dass** vom Steuergerät (5) und/oder dem Bearbeitungsgerät (6) vor dem Bearbeitungsvorgang überprüft wird, ob die Einlage, insbesondere der Stempelplatten-Rohling (80), in der richtigen Ausnehmung (113) der Bearbeitungseinlage (110) eingelegt ist.

## Claims

1. Text plate blank (80) for a processing device (6), in particular a laser plotter (9), for producing a text plate (2) for a, preferably manually operable, stamp (3) that consists of a flexible base material (81), wherein in order to obtain an even surface (82) of the flexible base material (81) for further processing the base material (81) is positioned on a base plate (83), such that it can be removed, and the base plate (83) is made of a solid material having high stiffness, **characterised in that** a double-sided adhesive tape (85) is provided for attaching the flexible base material (81) to the base plate (83).

2. Text plate blank (80) according to claim 1, **characterised in that** the flexible base material (81) preferably consists of a silicone-containing plastic, in particular rubber.

3. Text plate blank (80) according to claim 1 or 2, **characterised in that** the base plate (83) comprises means (86) for guiding in a corresponding recess (113) of a processing insert (110).

4. Text plate blank (80) according to one of the preceding claims 1 to 3, **characterised in that**, in order to form a lateral edge, in particular lateral guide tracks (87), the base material (81) is formed smaller than the base plate (83).

5. Text plate blank (80) according to one of the preceding claims 1 to 4, **characterised in that** the base plate (83) for accommodating the flexible base material (81) is formed as a holding element (93), in particular a base plate (94) and a frame (95) for inserting the flexible base material (81).

6. Text plate blank (80) according to one of the preceding claims 1 to 5, **characterised in that** the text plate blank (80) is formed for insertion into a processing insert (110), in particular a tray (111) or a jig, for further processing.

7. Text plate blank (80) according to one of the preceding claims 1 to 6, **characterised in that** the base plate (83) has, on at least one side, positioning means (88, 91) for attaching the flexible base material (81) and/or for positioning in a processing insert (110), in particular a tray (111) or a jig.

8. Text plate blank (80) according to one of the preceding claims 1 to 7, **characterised in that** for different stamp impression shapes, in particular circular, oval, or triangular, the base plate (83) is formed rectangular or square, or that, with adjusted stamp impression shapes, guides are arranged for accommodation in the processing insert (110).

9. Method for producing a text plate (2) for a stamp (3), in particular a hand stamp, in which on an input device (4) a stamp impression (7) is produced by the user, whereupon the stamp impression (7) is transferred to a control device (5) and the stamp impression (7) is converted by this control device in such a way that a processing device (6) is controlled for producing a negative stamp impression (7) on a text plate blank (80), **characterised in that** the user first selects a stamp impression size (46) or a stamp (3), and subsequently enters a text and/or graphic for forming the stamp impression (7) via input means, or the user first generates or produces, respectively, the stamp impression (7) via the input device (4) with corresponding input means, whereupon the input device (4) and/or the control device (5), in particular the software running therein, determines and proposes the stamp impression size (46) and/or the stamp (3), and the text plate blank is formed in accordance with any one of claims 1-8.

10. Method according to claim 9, **characterised in that**, before the production of the stamp impression (7) or after the production of the stamp impression (7), the costs for the production and/or the matching stamp (3) are displayed to the user.

11. Method according to claim 9 to 10, **characterised in that** a check is carried out by the control device (5) and/or the processing device (6) before the processing procedure as to whether the insert, in particular the text plate blank (80), has been inserted into the correct recess (113) of the processing insert (110).

## Revendications

1. Ébauche de la plaque-texte (80) pour un dispositif d'usinage (6), notamment un traceur laser (9) en vue de la création d'une plaque-texte (2) pour un tampon, notamment à commande manuelle (3), composé d'un matériau de base (81) flexible, en vue de la 10 réalisation d'une surface plane (82) du matériau de base (81) flexible en vue de la poursuite de l'usinage, le matériau de base (81) étant positionné de façon amovible sur une plaque de base (83) et la plaque de base (83) étant conçue en matériau solide à grande rigidité, **caractérisée en ce que**, en vue de la fixation du matériau de base (81) flexible sur la plaque de base (83), elle comporte un ruban adhésif double face (85).

2. Ébauche de la plaque-texte (80) selon la revendication 1, **caractérisée en ce que** le matériau de base (81) flexible se compose de préférence d'une matière synthétique à base de silicone, notamment de caoutchouc.

3. Ébauche de la plaque-texte (80) selon la revendication 1 ou 2, **caractérisée en ce que** la plaque de base (83) comporte des dispositifs (86) en vue du guidage dans un évidement (113) correspondant d'une pièce intermédiaire d'usinage (110).

4. Ébauche de la plaque-texte (80) selon l'une des revendications précédentes 1 à 3, **caractérisée en ce que** le matériau de base (81) flexible est plus petit que la plaque de base (83) en vue de la formation d'un bord latéral, notamment des rails de guidage (87) latéraux.

5. Ébauche de la plaque-texte (80) selon l'une des revendications précédentes 1 à 4, **caractérisée en ce que** la plaque de base (83), en vue du positionnement du matériau de base (81) flexible, est conçue comme élément de support (93), notamment d'une plaque de base (94) et d'un cadre (95), en vue de l'insertion du matériau de base (81) flexible.

6. Ébauche de la plaque-texte (80) selon l'une ou plusieurs des revendications précédentes 1 à 5, **caractérisée en ce que** l'ébauche de la plaque-texte (80) est conçue en vue de l'insertion dans une pièce intermédiaire d'usinage (110), notamment un plateau (111) ou un gabarit en vue d'un usinage ultérieur.

7. Ébauche de la plaque-texte (80) selon l'une ou plusieurs des revendications précédentes 1 à 6, **caractérisée en ce que**, la plaque de base (83) comporte, au moins d'un coté, des dispositifs de positionnement (88, 91) en vue de la fixation du matériau de base (81) flexible et/ou en vue du positionnement dans une pièce intermédiaire d'usinage (110), notamment un plateau (111) ou un gabarit.

8. Ébauche de la plaque-texte (80) selon l'une ou plusieurs des revendications précédentes 1 à 7, **caractérisée en ce que**, pour différentes formes d'empreintes de tampons, notamment rondes, ovales, triangulaires, la plaque de base (83) est conçue de forme rectangulaire ou carrée, ou qu'elle comporte des guidages en vue du positionnement dans la pièce intermédiaire d'usinage (110) pour des formes d'empreintes de tampons adaptées.

9. Procédé en vue de la création d'une plaque-texte (2) pour un tampon (3), notamment un tampon à encrage séparé, sur lequel l'utilisateur crée une empreinte de tampon (7) sur un dispositif de saisie (4), l'empreinte de tampon (7) étant alors transférée vers une unité de commande (5) où l'empreinte de tampon (7) est convertie de manière à activer un dispositif d'usinage (6) en vue de la création d'une empreinte de tampon (7) négative sur une ébauche de la plaque-texte (80), **caractérisé en ce que** l'utilisateur sélectionne d'abord une taille d'empreinte de tampon (46) ou un tampon (3) puis saisisse un texte et/ou un graphique à partir d'un périphérique de saisie en vue de la création de l'empreinte de tampon (7) ou que l'utilisateur génère ou crée d'abord l'empreinte de tampon (7) à partir d'un dispositif de saisie (4) à l'aide de périphériques de saisie appropriés, suite à quoi le dispositif de saisie (4) et/ou l'unité de commande (5), notamment le logiciel qui y est installé, détermine(nt) et suggère(nt) la taille de l'empreinte de tampon (46) et/ou le tampon (3) et l'ébauche de la plaque-texte est conçue selon l'une des revendications 1 à 8.

10. Procédé selon la revendication 9, **caractérisé en ce que** les coûts de fabrication et/ou du tampon (3) correspondant sont affichés à l'utilisateur, avant la création de l'empreinte de tampon (7) ou après la création de l'empreinte de tampon (7).

11. Procédé selon la revendication 9 ou 10, **caractérisé en ce que** l'unité de commande (5) et/ou le dispositif d'usinage (6) vérifie(nt) avant l'opération d'usinage si la pièce intermédiaire, notamment l'ébauche de la plaque-texte (80), est insérée dans le bon évidement (113) de la pièce intermédiaire d'usinage (110).
